# EUROPEAN PATENT APPLICATION

(11) **EP 3 660 661 A1**
(43) Date of publication of application: **03.06.2020**
(21) Application number: 19209225.2
(22) Date of filing: 14.11.2019
(51) Int. Cl.: G06F 3/16, G06F 3/12

(54) **INFORMATION PROCESSING SYSTEM, METHOD OF PROCESSING INFORMATION AND CARRIER MEANS**

(30) Priority: 30.11.2018 JP 2018226144
(71) Applicant: Ricoh Company, Ltd., Tokyo 143-8555 (JP)
(72) Inventor: YASUDA, Sayaka, Ohta-ku, Tokyo 143-8555 (JP); YOSHIMI, Shun, Ohta-ku, Tokyo 143-8555 (JP); NAKAMURA, Yutaka, Ohta-ku, Tokyo 143-8555 (JP); INOUE, Takayuki, Ohta-ku, Tokyo 143-8555 (JP); KATSUMATA, Motoyuki, Ohta-ku, Tokyo 143-8555 (JP); KAORI, Ozeki, Ohta-ku, Tokyo 143-8555 (JP)
(74) Representative: White, Duncan Rohan

(57) **Abstract**

An information processing system includes an acquisition unit (51) configured to acquire audio information used for operating a target apparatus (1), an audio recognition unit (62) configured to recognize content of the acquired audio information as a recognition result to determine whether the recognition result includes a specific keyword, a notification unit (55) configured to notify, using a display, pre-defined specific operation information when the recognition result includes the specific keyword, and an output unit (52) configured to output the pre-defined specific operation information to the target apparatus (1).

## Description

### BACKGROUND

### Technical Field

This disclosure relates to an information processing system, a method of processing information, and carrier means storing program codes for causing a computer to execute a method of processing information.

### Background Art

Some image forming apparatuses, such as multifunction peripherals (MFP) can use voice sound as instructions to operate the image forming apparatuses. Conventionally, when an interactive operation procedure is used for operating target apparatuses (e.g., image forming apparatuses) using voice sound as instructions to the target apparatuses, users not familiar with voice-based operations may instruct a job to the target apparatuses by answering every one of the setting conditions inquired from the target apparatuses one by one, causing a longer time to execute the job using the target apparatuses.

### SUMMARY

As one aspect of the present disclosure, an information processing system is devised. The information processing system includes an acquisition unit configured to acquire audio information used for operating a target apparatus, an audio recognition unit configured to recognize content of the acquired audio information as a recognition result to determine whether the recognition result includes a specific keyword, a notification unit configured to notify, using a display, pre-defined specific operation information when the recognition result includes the specific keyword, and an output unit configured to output the pre-defined specific operation information to the target apparatus.

As another aspect of the present disclosure, a method of processing information is devised. The method includes acquiring audio information used for operating a target apparatus, recognizing content of the acquired audio information as a recognition result, determining whether the recognition result includes a specific keyword, notifying, using a display, pre-defined specific operation information when the recognition result includes the specific keyword, and outputting the pre-defined specific operation information to the target apparatus.

As another aspect of the present disclosure, a carrier means storing one or more instructions that, when performed by one or more processors, cause the one or more processors to execute a method of processing information is devised. The method includes acquiring audio information used for operating a target apparatus, recognizing content of the acquired audio information as a recognition result, determining whether the recognition result includes a specific keyword, notifying, using a display, pre-defined specific operation information when the recognition result includes the specific keyword, and outputting the pre-defined specific operation information to the target apparatus.

As to the above aspects of the present invention, a given operation can be performed with a smaller number of dialogues and intuitive manner. Specifically, if a specific keyword is included in a user spoken instruction, the pre-defined specific operation information can be displayed on a screen of the information processing apparatus, with which a specific operation can be performed with a smaller number of dialogues and intuitive manner when instructing the specific operation.

### BRIEF DESCRIPTION OF THE DRAWINGS

A more complete appreciation of the description and many of the attendant advantages and features thereof can be readily acquired and understood from the following detailed description with reference to the accompanying drawings, wherein:
FIG. 1 is a diagram illustrating an example system configuration of an audio-based operation system according to a first embodiment of the present disclosure;
FIG. 2 is an example block diagram of a hardware configuration of a multifunction peripheral (MFP) provided for an audio-based operation system according to the first embodiment;
FIG. 3 is an example block diagram of a hardware configuration of a mobile terminal provided for an audio-based operation system according to the first embodiment;
FIG. 4 is an example block diagram of a hardware configuration of an audio recognition server provided for an audio-based operation system according to the first embodiment;
FIG. 5 is an example block diagram of a hardware configuration of an artificial intelligence (AI) assistant server provided for an audio-based operation system according to the first embodiment;
FIG. 6 is an example block diagram of a functional configuration of a mobile terminal provided for an audio-based operation system according to the first embodiment;
FIG. 7 is an example block diagram of a functional configuration of an audio recognition server provided for an audio-based operation system according to the first embodiment;
FIG. 8 is an example block diagram of a functional configuration of an AI assistant server provided for an audio-based operation system according to the first embodiment;
FIG. 9 is a sequence diagram illustrating a flow of an overall operation of audio-based operation in an audio-based operation system according to the first embodiment;
FIG. 10 illustrates an example of entity information used for interpreting an audio input by a user in an audio-based operation system according to the first embodiment;
FIGs. 11A, 11B and 11C illustrate an example of entity information registered based on a spoken phrase in an audio-based operation system according to the first embodiment;
FIG. 12 is a diagram illustrating a flow of an interactive input operation in an audio-based operation system according to the first embodiment;
FIG. 13 indicates an example of a screen display when processing indicated in FIG. 12 is performed;
FIG. 14 is a sequence diagram indicating a flow of a first half of an interactive input operation in an audio-based operation system according to the first embodiment;
FIG. 15 is a sequence diagram illustrating a flow of a second half of an interactive input operation in an audio-based operation system according to the first embodiment, continued from FIG. 14;
FIG. 16 is an example of a screen display when a mobile terminal receives an interpretation result;
FIG. 17 is an example diagram of a system configuration of an audio-based operation system according to a second embodiment;
FIG. 18 is an example block diagram of a hardware configuration of a smart speaker according to the second embodiment;
FIG. 19 is an example block diagram of a hardware configuration of a cloud service apparatus according to the second embodiment;
FIG. 20 is an example block diagram of a functional configuration of a cloud service according to the second embodiment;
FIG. 21 is an example block diagram of a functional configuration of a smart speaker according to the second embodiment;
FIG. 22 is an example of a functional block diagram illustrating each functional unit implemented by the cloud service according to the second embodiment;
FIG. 23 is an example a sequence diagram illustrating a flow of an activation operation according to the second embodiment;
FIG. 24 is an example a sequence diagram illustrating a flow of an interactive operation after activation according to the second embodiment;
FIG. 25 is an example a sequence diagram illustrating a flow of an interactive operation after activation according to the second embodiment, continued from FIG. 24;
FIG. 26 is an example a sequence diagram illustrating a flow of an interactive operation after activation according to the second embodiment, continued from FIG. 25; and
FIG. 27 is an example of a screen displayed on a display of a smart speaker according to the second embodiment.

The accompanying drawings are intended to depict embodiments of the present invention and should not be interpreted to limit the scope thereof. The accompanying drawings are not to be considered as drawn to scale unless explicitly noted.

### DETAILED DESCRIPTION

A description is now given of exemplary embodiments of the present inventions. It should be noted that although such terms as first, second, etc. may be used herein to describe various elements, components, regions, layers and/or units, it should be understood that such elements, components, regions, layers and/or units are not limited thereby because such terms are relative, that is, used only to distinguish one element, component, region, layer or unit from another region, layer or unit. Thus, for example, a first element, component, region, layer or unit discussed below could be termed a second element, component, region, layer or unit without departing from the teachings of the present inventions.

In addition, it should be noted that the terminology used herein is for the purpose of describing particular embodiments only and is not intended to be limiting of the present inventions. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Hereinafter, a description is given of an information processing system, an information processing apparatus, an information processing method, and an information processing program.

### First Embodiment:

### System Configuration:

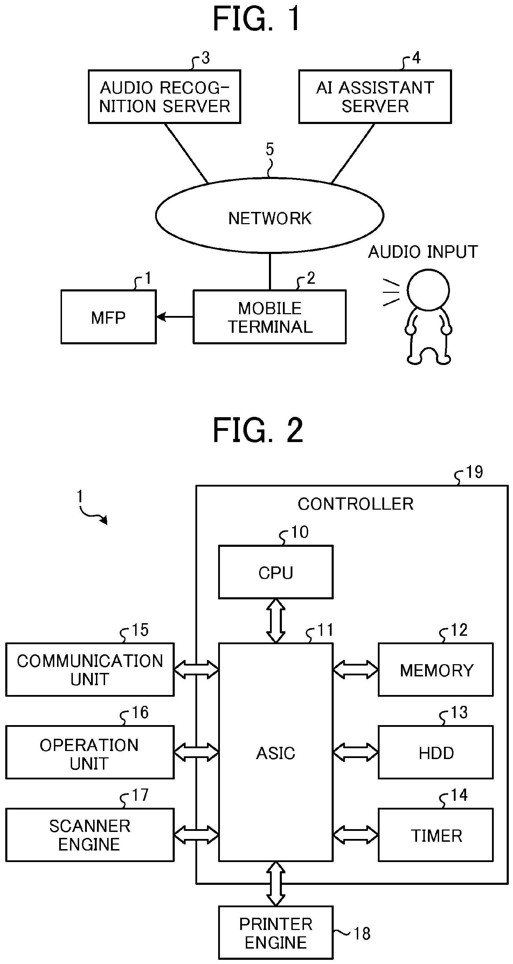

FIG. 1 is a diagram illustrating an example system configuration of an audio-based operation system according to a first embodiment of the present disclosure. As illustrated in FIG. 1, the audio-based operation system can be configured by connecting a plurality of apparatuses or devices, such as a multifunction peripheral (MFP) 1 (an example of target apparatus), a mobile terminal 2 (an example of information processing apparatus), such as smart phone or tablet terminal, an audio recognition server 3, and an artificial intelligence (AI) assistant server 4 via a network 5, such as local area network (LAN). The target apparatus is not limited to the multifunction peripheral (MFP) but can be a variety of electronic apparatuses and devices including office apparatuses, such as electronic information board and projector.

The mobile terminal 2 receives an audio (e.g., voice), input by a user, to perform an audio-based operation (audio-use operation) of the MFP 1. Further, the mobile terminal 2 feeds back the received operation to the user using audio, such as sound. Further, the mobile terminal 2 relays data communication (text data communication to be described later) between the audio recognition server 3 and the AI assistant server 4.

The audio recognition server 3 analyzes audio data received from the mobile terminal 2 and converts the audio data into text data. The audio recognition server 3 corresponds to a first server in this description (an example of information processing apparatus).

The AI assistant server 4 analyzes the text data, which may be received from the audio recognition server 3, and converts the text data into a user intention registered in advance, such as a job execution instruction of the MFP 1, and transmits the user intention (job execution instruction) to the mobile terminal 2.

The AI assistant server 4 corresponds to a second server in this description (an example of information processing apparatus). The MFP 1 executes the job execution instruction transmitted from the mobile terminal 2. The communication between the mobile terminal 2 and the MFP 1 can be performed by wireless communication or wired communication. That is, the mobile terminal 2 can be employed as an operation terminal that can be connected to the MFP 1 using wireless communication or wired communication. Further, the mobile terminal 2 can be employed as an operation terminal that can be detachably attached to the MFP 1.

In this example case, two servers such as the audio recognition server 3 and the AI assistant server 4 are provided, but the audio recognition server 3 and the AI assistant server 4 can be integrated as a single server. Further, each of the audio recognition server 3 and the AI assistant server 4 can be configured using a plurality of servers.

### Hardware Configuration of MFP:

FIG. 2 is an example block diagram of a hardware configuration of the MFP 1 provided in the audio-based operation system. The MFP 1 provides a plurality of functions, such as a printer function and a scanner function. That is, as illustrated in FIG. 2, the MFP 1 includes, for example, a controller 19, a communication unit 15, an operation unit 16, a scanner engine 17, and a printer engine 18.

As illustrated in FIG. 2, the controller 19 includes, for example, a central processing unit (CPU) 10, an application specific integrated circuit (ASIC) 11, a memory 12, a hard disk drive (HDD) 13, and a timer 14. The CPU 10 to the timer 14 are connected to each other via a bus line to enable interactive communication.

The communication unit 15 is connected to the network 5, and acquires a job execution instruction, such as a scan instruction or a print instruction, input by using the mobile terminal 2, to be described later. The communication unit 15 is implemented by, for example, a network interface circuit.

The operation unit 16 is, for example, a touch panel integrating a liquid crystal display (LCD) and a touch sensor. When an operator (user) inputs an execution instruction of a desired operation using the operation unit 16, the operator can designate the desired operation by operating one or more operation buttons (e.g., software keys) displayed on the operation unit 16.

The scanner engine 17 controls a scanner unit to optically read document. The printer engine 18 controls an image writing unit to print an image on sheet, for example, transfer sheet. The CPU 10 controls the image forming apparatus entirely. The ASIC 11, which is a large-scale integrated circuit (LSI), performs various image processing on images to be processed by the scanner engine 17 and the printer engine 18. The scanner engine 17 and the printer engine 18, which are engines for executing the job execution instruction acquired from the mobile terminal 2, correspond to the functional units.

The memory 12 stores various applications to be executed by the CPU 10 and various data to be used when executing various applications. The HDD 13 stores image data, various programs, font data, various files, or the like. Further, a solid state drive (SSD) can be provided in place of the HDD 13 or along with the HDD 13. Hardware Configuration of Mobile Terminal:

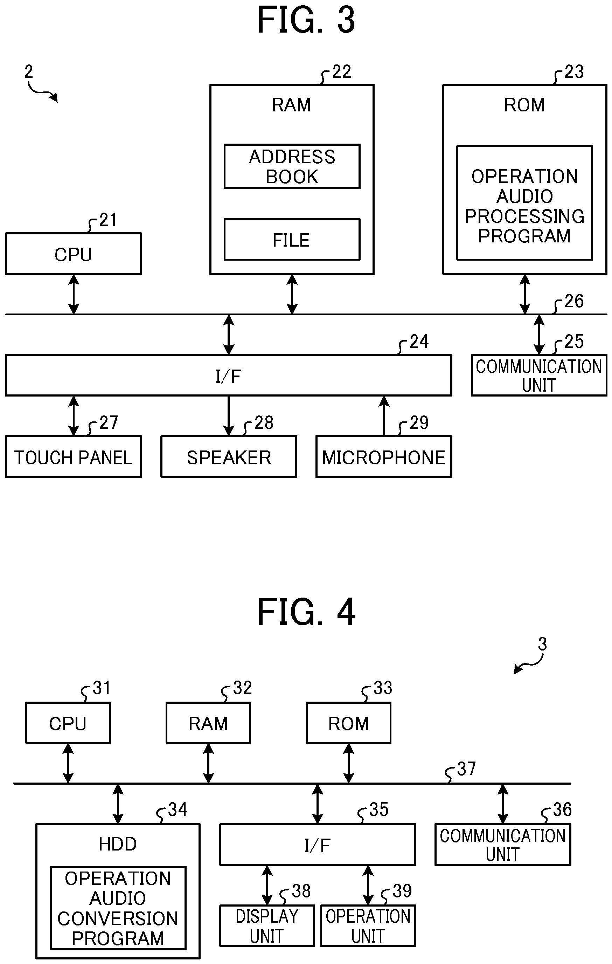

FIG. 3 is an example block diagram of a hardware configuration of the mobile terminal 2 provided in the audio-based operation system. As illustrated in FIG. 3, the mobile terminal 2 includes, for example, a CPU 21, a random access memory (RAM) 22, a read only memory (ROM) 23, an interface (I/F) 24, and a communication unit 25 connected with each other via a bus line 26. The RAM 22 stores, for example, an address book storing e-mail addresses of users who can become transmission destinations of e-mail, scanned image, and the like. The RAM 22 further stores files of image data to be printed. The communication unit 25 is implemented by, for example, a network interface circuit.

The ROM 23 stores an operation audio processing program. When the CPU 21 executes the operation audio processing program, an audio input operation of the MFP 1 can be performed.

The I/F 24 is connected to a touch panel 27, a speaker 28, and a microphone 29. The microphone 29 collects or acquires an input audio indicating a job execution instruction to the MFP 1 in addition to communication voice. The input audio is transmitted to the audio recognition server 3 via the communication unit 25, and then converted into text data in the audio recognition server 3.

### Hardware Configuration of Audio Recognition Server:

FIG. 4 is an example block diagram of a hardware configuration of the audio recognition server 3 provided in the audio-based operation system. As illustrated in FIG. 4, the audio recognition server 3 includes, for example, a CPU 31, a RAM 32, a ROM 33, a hard disk drive (HDD) 34, an interface (I/F) 35, and a communication unit 36 connected with each other via a bus line 37. The I/F 35 is connected to a display 38 and an operation unit 39. The HDD 34 stores an operation audio conversion program used for converting audio data into text data. The CPU 31 executes the operation audio conversion program to convert the audio data transmitted from the mobile terminal 2 into the text data, and then returns the text data to the mobile terminal 2. The communication unit 36 is implemented by, for example, a network interface circuit. Hardware Configuration of AI Assistant Server:

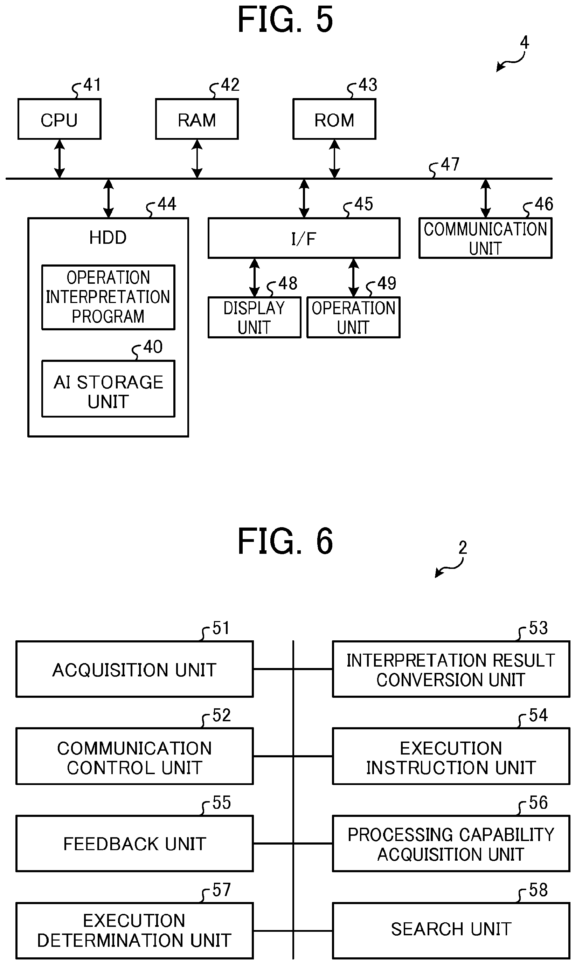

FIG. 5 is an example block diagram of a hardware configuration of the AI assistant server 4 provided in the audio-based operation system. As illustrated in FIG. 5, the AI assistant server 4 includes, for example, a CPU 41, a RAM 42, a ROM 43, an HDD 44, an interface (I/F) 45, and a communication unit 46 connected to each other via a bus line 47. The I/F 45 is connected to a display 48 and an operation unit 49. The HDD 44 stores an operation interpretation program used for interpreting a job instructed by a user. The communication unit 46 is implemented by, for example, a network interface circuit.

The CPU 41 executes the operation interpretation program to interpret the job instructed by the user from the text data generated (converted) by the audio recognition server 3. Then, an interpretation result is transmitted to the mobile terminal 2. The mobile terminal 2 converts the interpretation result into a job instruction or job execution instruction, and transmits the job instruction to the MFP 1. As a result, the MFP 1 can be operated by the audio input via the mobile terminal 2.

### Function of Mobile Terminal:

FIG. 6 is an example block diagram of a functional configuration of the mobile terminal 2 provided in the audio-based operation system. When the CPU 21 of the mobile terminal 2 executes the operation audio processing program stored in the ROM 23, the CPU 21 implements functions, such as an acquisition unit 51, a communication control unit 52, an interpretation result conversion unit 53, an execution instruction unit 54, a feedback unit 55, a processing capability acquisition unit 56, an execution determination unit 57, and a search unit 58 as illustrated in FIG. 6.

The acquisition unit 51, which is an example of an acquisition unit, acquires an audio instruction input by a user collected via the microphone 29, which is used for an audio-based operation of the MFP 1.

The communication control unit 52, which is an example of an output unit, controls communication between the mobile terminal 2 and the MFP 1, communication between the mobile terminal 2 and the audio recognition server 3, and communication between the mobile terminal 2 and the AI assistant server 4.

The interpretation result conversion unit 53 converts an interpretation result of text data corresponding to user's audio instruction into a job instruction or job execution instruction of the MFP 1. The execution instruction unit 54 transmits the job instruction or job execution instruction to the MFP 1 to instruct a job execution.

The feedback unit 55, which is an example of a notification unit, feeds back information to implement an interactive audio input operation, in which the feedback unit 55 feeds back, for example, audio and/or screen display for demanding or prompting an input of data determined as insufficient, or audio and/or screen display for demanding or prompting a confirmation of the input of data.

The processing capability acquisition unit 56 acquires, from the MFP 1, information of processing capability of the MFP 1, such as the maximum number of pixels that can be processed at the MFP 1.

The execution determination unit 57 compares the processing capability of the MFP 1 and a job designated by the user to determine whether or not the job designated by the user can be executed using the processing capability of the MFP 1.

The search unit 58 searches a transmission destination and/or a file instructed by the audio instruction of user from a memory, such as the RAM 22.

In this example case, the acquisition unit 51 to the search unit 58 are implemented by software, but a part or all of the acquisition unit 51 to the search unit 58 can be implemented by hardware, such as integrated circuit (IC). Further, the functions implemented by the acquisition unit 51 to the search unit 58 can be implemented by the operation audio processing program alone, or a part of the functions implemented by the acquisition unit 51 to the search unit 58 can be implemented by using other programs, or the functions implemented by the acquisition unit 51 to the search unit 58 can be implemented indirectly by executing other programs. For example, information such as the processing capability of MFP 1 can be acquired by other programs, and the processing capability acquisition unit 56 can acquire the information acquired by other programs, in which the processing capability acquisition unit 56 can acquire the information set for the MFP 1 indirectly. Function of Audio Recognition Server:

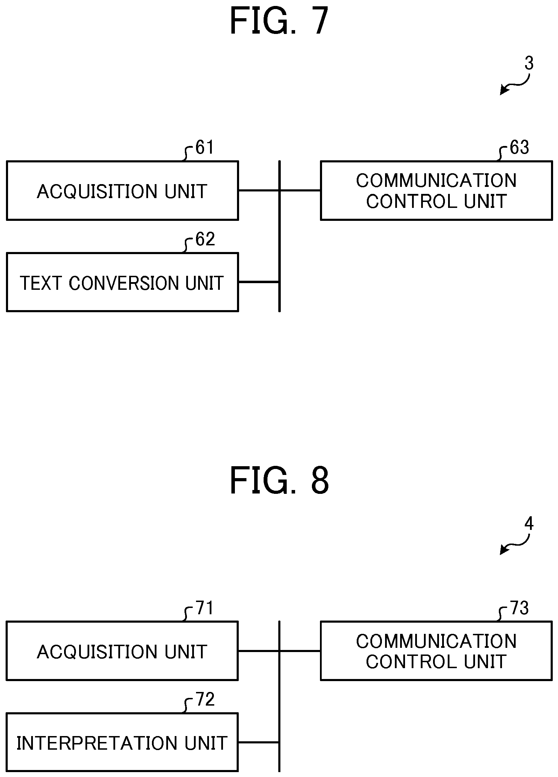

FIG. 7 is an example block diagram of a functional configuration of the audio recognition server 3 provided in the audio-based operation system. The CPU 31 of the audio recognition server 3 executes the operation audio conversion program stored in the HDD 34 to implement functions, such as an acquisition unit 61, a text conversion unit 62, and a communication control unit 63 as illustrated in FIG. 7. The acquisition unit 61 acquires audio data input by a user, which is transmitted from the mobile terminal 2. The text conversion unit 62, which is an example of an audio recognition unit, converts the audio data input by the user into text data. The communication control unit 63 controls the communication unit 36 to receive the audio data input by the user and to transmit the text data to the mobile terminal 2.

In this example case, the acquisition unit 61 to the communication control unit 63 are implemented by software, but a part or all of the acquisition unit 61 to the communication control unit 63 can be implemented by hardware, such as integrated circuit (IC). Further, the functions implemented by the acquisition unit 61 to the communication control unit 63 can be implemented by the operation audio conversion program alone, a part of the functions implemented by the acquisition unit 61 to the communication control unit 63 can be implemented by using other programs, or the functions implemented by the acquisition unit 61 to the communication control unit 63 can be implemented indirectly by executing other programs.

### Function of AI Assistant Server:

FIG. 8 is an example block diagram of a functional configuration of the AI assistant server 4 provided in the audio-based operation system. The CPU 41 of the AI assistant server 4 executes the operation interpretation program stored in the HDD 44 to implement functions, such as an acquisition unit 71, an interpretation unit 72, and a communication control unit 73 as illustrated in FIG. 8.

The acquisition unit 71 acquires text data, corresponding to the audio data input by the user, which is transmitted from the mobile terminal 2. The interpretation unit 72 interprets an operation instruction input by the user based on the text data. The communication control unit 73 controls the communication unit 46 to transmit an interpretation result to the mobile terminal 2 and to receive the text data corresponding to the audio data input by the user.

In this example case, the acquisition unit 71 to the communication control unit 73 are implemented by software, but a part or all of the acquisition unit 71 to the communication control unit 73 can be implemented by hardware, such as integrated circuit (IC). Further, the functions implemented by the acquisition unit 71 to the communication control unit 73 can be implemented by the operation interpretation program alone, or a part of the functions implemented by the acquisition unit 71 to the communication control unit 73 can be implemented by using other programs, or the functions implemented by the acquisition unit 71 to the communication control unit 73 can be implemented by executing other programs.

Further, the operation audio processing program, the operation audio conversion program, and the operation interpretation program can be recorded on a recording medium such as compact disk ROM (CD-ROM), flexible disk (FD), readable by computers, in an installable format or an executable format file. Further, the operation audio processing program, the operation audio conversion program, and the operation interpretation program can be recorded on a recording medium, such as compact disk recordable (CD-R), digital versatile disk (DVD), Blu-ray Disc (registered trademark) and semiconductor memory, readable by computers. Further, the operation audio processing program, the operation audio conversion program, and the operation interpretation program can be provided via a network such as the Internet or the like, or can be provided in advance in a ROM or the like disposed in the apparatus.

### Audio Input Operation:

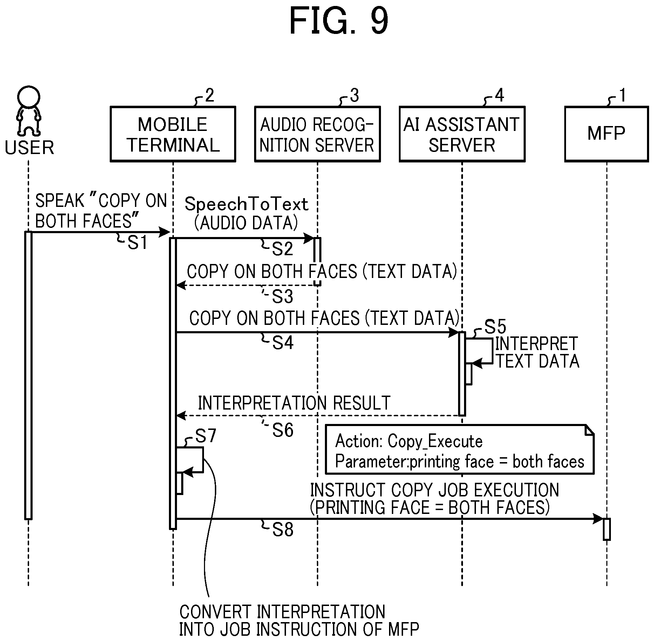

Hereinafter, a description is given of an audio input operation in the audio-based operation system according to the first embodiment with reference to FIG. 9. FIG. 9 is a sequence diagram illustrating a flow of an overall operation of audio-based operation in the audio-based operation system. FIG. 9 illustrates an example case of operating the MFP 1 to perform a both-face (double-sided) copying function based on an audio input operation via the mobile terminal 2.

In this example case, a user activates the operation audio processing program of the mobile terminal 2, and then speaks, for example, "copy on both faces" to the mobile terminal 2. Then, the audio (e.g., voice) of the user is collected by the microphone 29 of the mobile terminal 2 and then acquired by the acquisition unit 51 of the mobile terminal 2 (step S1).

Then, the communication control unit 52 of the mobile terminal 2 transmits audio data of "copy on both faces" to the audio recognition server 3 and controls the communication unit 25 to transmit an audio-to-text conversion request to the audio recognition server 3 (step S2).

Then, the text conversion unit 62 of the audio recognition server 3 converts the audio data of "copy on both faces" into text data.

Then, the communication control unit 63 of the audio recognition server 3 controls the communication unit 36 to transmit the text data, converted from the audio data, to the mobile terminal 2 (step S3).

Then, the communication control unit 52 of the mobile terminal 2 transmits the text data of "copy on both faces" to the AI assistant server 4 (step S4).

In this example case, the interpretation unit 72 of the AI assistant server 4 interprets the text data of "copy on both faces" as an operation to be requested to the MFP 1 such as "copy (Action: Copy_Execute)" and interprets that "printing face is both faces (printing face = both faces)" (step S5). In step S5, the interpretation unit 72 generates an interpretation result indicating the type (action) and content (parameter) of a job designated by the user based on the interpretation of text data.

Then, the communication control unit 63 of the AI assistant server 4 transmits the interpretation result to the mobile terminal 2 via the communication unit 46 (step S6).

Then, the interpretation result conversion unit 53 of the mobile terminal 2 converts the interpretation result received from the AI assistant server 4 into a job instruction of the MFP 1 (step S7). The following Table 1 illustrates an example of interpretation results and job instructions converted from the interpretation results. To convert the interpretation results into the job instructions, the interpretation result conversion unit 53 can be configured to store information corresponding to Table 1 in the storage unit (ROM 23) of the mobile terminal 2 and refer to Table 1 as needed.

**Table 1**

| Name | Value | Processing by voice actions application |
|---|---|---|
| Action | COPY_EXECUTE | Execution of copy job |
| | SCAN_EXECUTE | Execution of scan job |
| | PRINT_EXECUTE | Execution of print job |
| | FAX_EXECUTE | Execution of fax job |
| Parameter | printing face | Change setting value of printing face |
| | number of copies | Change setting value of number of copies |
| | *parameter may include any value designatable as job setting value | |

In an example of Table 1, "COPY_EXECUTE," "SCAN_EXECUTE," "PRINT_EXECUTE," and "FAX_EXECUTE" are set as examples of the Action. Further, the "printing face" and "number of copies" are indicated as examples of the Parameter. The parameter includes any parameter that can be designated as the job setting value.

The interpretation result conversion unit 53 of the mobile terminal 2 converts an interpretation result of "COPY_EXECUTE" into a job instruction of the MFP 1 such as "Execution of copy job." Similarly, the interpretation result conversion unit 53 converts an interpretation result of "SCAN_EXECUTE" into a job instruction of the MFP 1 such as "Execution of scan job." Similarly, the interpretation result conversion unit 53 converts an interpretation result of "PRINT_EXECUTE" into a job instruction of the MFP 1 such as "Execution of print job." Similarly, the interpretation result conversion unit 53 converts an interpretation result of "FAX_EXECUTE" into a job instruction of the MFP 1 such as "Execution of fax job."

Further, if the interpretation result includes the parameter of "printing face," the interpretation result conversion unit 53 of the mobile terminal 2 generates a job instruction of the MFP 1, such as "change setting value of printing face." Similarly, if the interpretation result includes the parameter of "number of copies," the interpretation result conversion unit 53 generates a job instruction of the MFP 1, such as "change setting value of number of copies."

That is, the interpretation result conversion unit 53 of the mobile terminal 2 determines a type of job to be executed in the MFP 1 based on the information included in "Action" of the interpretation result, determines a value included in the "Parameter" as the job setting value, and converts the interpretation result into the job instruction.

Then, the communication control unit 52 of the mobile terminal 2 controls the communication unit 25 to transmit the job instruction generated as above described to the MFP 1 (step S8). In this example case, the job instruction of "copy job execution (printing face = both faces)" is transmitted to MFP 1. As a result, the duplex printing is executed at the MFP 1.

### Interpretation in AI Assistant Server:

An AI storage unit 40 of the HDD 44 of the AI assistant server 4 stores AI assistant service information used for interpreting a job instructed by an audio input by a user. The AI assistant service information includes, for example, entity information (Entity), action information (Action), and intent information (Intent).

The entity information is information that associates parameters of job with natural language. A plurality of synonyms can be registered for one parameter. The action information is information indicating a type of job.

The intent information associates the user-spoken phrases (natural language) and the entity information, and the user-spoken phrases (natural language) and the action information, respectively. The intent information enables a correct interpretation even if a sequence or nuance of the parameter is slightly changed. Further, the intent information can be used to generate text (interpretation result) as response, based on the input content.

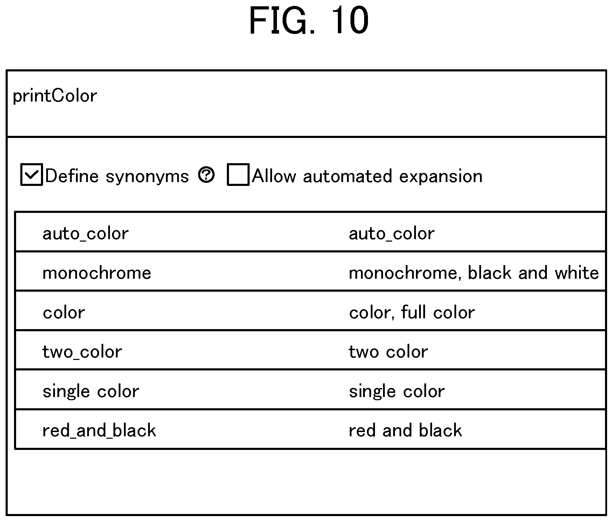

FIG. 10 illustrates an example of the entity information used for interpreting an audio input by a user in the audio-based operation system. FIG. 10 is an example of the entity information corresponding to "printColor." In FIG. 10, characters of "printColor" indicates an entity name. Further, in FIG. 10, characters such as "auto_color," "monochrome," "color," or the like in the left column indicate specific parameter names, respectively. Further, in FIG. 10, characters such as "auto_color," "monochrome, black and white," "color, full color," or the like in the right column indicate specific synonyms, respectively.

As indicated in FIG. 10, the parameters and synonyms can be associated with each other as the entity information. By registering the associated parameters and synonyms, for example, if a copying of monochrome is to be instructed, the parameter can be set even if a user speaks "Please copy by black and white" or "Please copy by monochrome."

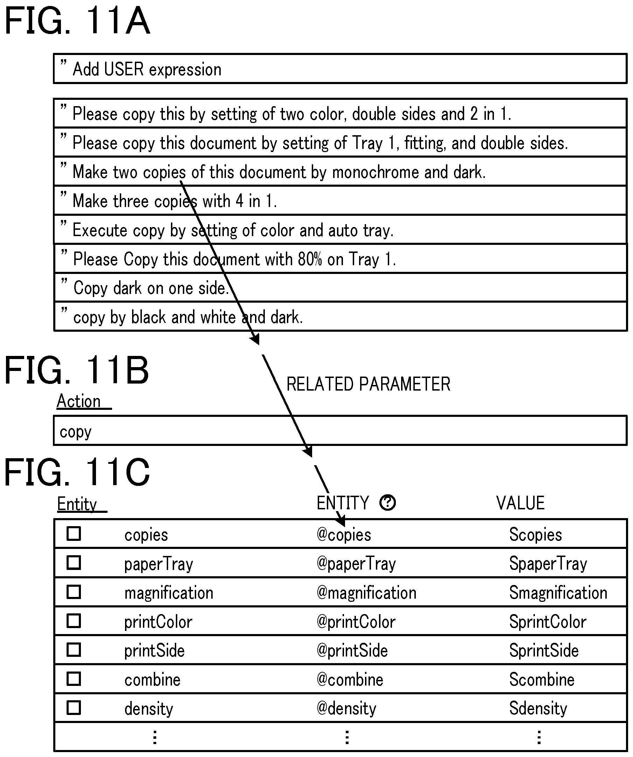

FIG. 11 is an example of entity information that is registered based on a spoken phrase. FIG. 11A illustrates phrases spoken by user, FIG. 11B illustrates an action name, and FIG. 11C illustrates the entity information. As indicated in FIGs. 11A to 11C, by operating the operation unit 49 on a screen displayed on the display unit 48 provided for the AI assistant server 4, the user-spoken content can be dragged. Alternatively, if another apparatus is connected to the AI assistant server 4 via a network, by operating an operation unit of another apparatus that have accessed the AI assistant server 4 via the network, the user-spoken content can be dragged.

With this configuration, the entity information, which is a target of association, can be selected. Further, when a value ("VALUE" in FIG. 11C) is set for the selected entity information, the parameter, which is entered as the response, is changed. For example, if the user speaks "Please copy by black and white," and the value is "SprintColor," a return value of "printColor = monochrome" is returned. In contrast, if the value is "SprintColor.original," then a return value of "printColor = black and white" is returned. In this case, if the value is "SprintColor.original," the user-spoken content itself can be returned as the parameter of the response.

### Interactive Operation:

Hereinafter, a description is given of an interactive operation implemented in the audio-based operation system of the first embodiment, in which the system performs an interactive operation based on content input by a user, such as audio (e.g., voice) input by the user. In the audio-based operation system of the first embodiment, in addition to responding to standard phrases required for the interactive operation, the system performs the interactive operation using the MFP 1 by performing two types of responses, such as "input insufficient feedback" and "input confirmation feedback," set as specific responses used for the interactive operation using the MFP 1.

The "input insufficient feedback" is a response that is output when the information required to execute a job is insufficient. If the information content input by the user cannot be recognized by the system, or if the required parameter is determined to be insufficient, the "input insufficient feedback" is output. That is, for the parameter other than the required parameter (hereinafter, non-relevant parameter), it is not necessary to provide insufficient feedback even if the non-relevant parameter is not instructed. Further, in addition to the parameter, a process of checking to-be-used function, such as copying function and scanning function, can be also included in the "input insufficient feedback."

For example, depending on the type of a target apparatus being connected for communicating with the mobile terminal 2, the functions and the parameters to be checked by the user can be changed. In this case, the processing capability acquisition unit 56 acquires information indicating the type and function of the target apparatus at a given timing after the communication with the target apparatus is established, and then, for example, the feedback unit 55 can determine the function and the parameter to be confirmed by the user based on the acquired information. For example, if the type of target apparatus is the MFP 1, the functions included in the MFP 1 such as copying, printing, scanning, facsimile can be confirmed by the user, and the functions, such as copying, printing, scanning, and facsimile included in the MFP 1, which function is to used can be confirmed by the user.

The "input confirmation feedback" is a response that is output when the information required to execute the job is sufficiently prepared. That is, the "input confirmation feedback" is output only when all of the required parameters are instructed. Further, the input confirmation feedback is performed to demand or prompt the user to select whether to execute the job using the current setting values or to change the current setting values. In order to confirm whether or not to execute the job using the current setting values, all of the parameters (any required parameter and any non-required parameter) instructed by the user can be output as an audio sound so that the parameters can be confirmed by the user.

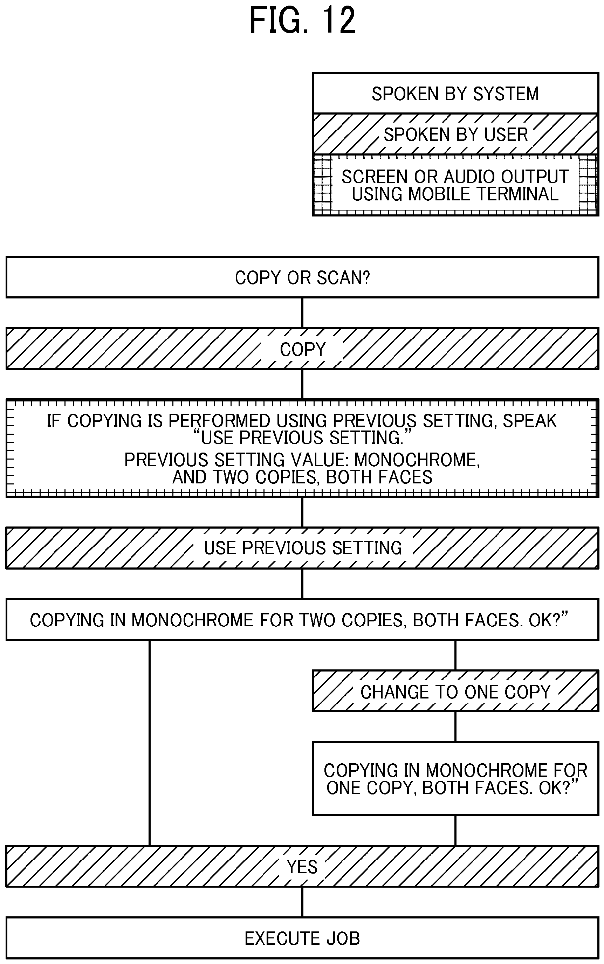

Hereinafter, a description is given of a flow of an interactive input operation with reference to FIG. 12. FIG. 12 illustrates an example of an interactive operation between the system and a user, including the above described feedback. FIG. 12 indicates an example of an operation of the MFP 1 to perform copying of two copies of a monochrome image on both faces of a recording medium, such as sheet. In this example case, the number of copies (e.g., one copy) becomes the required parameter. The required parameter is not limited to the number of copies, but may include a plurality of parameters, such as monochrome, color, and sheet size.

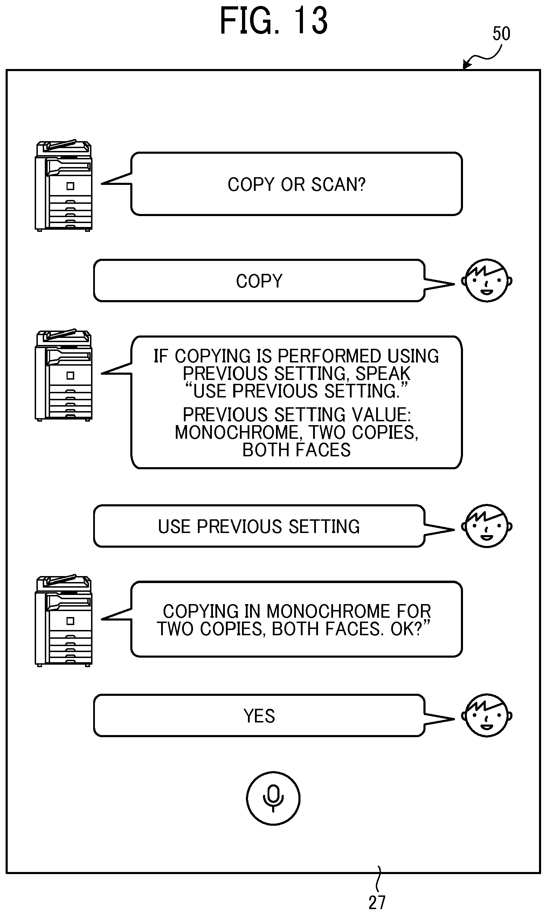

FIG. 13 indicates an example of a screen display when the process indicated in FIG. 12 is performed. That is, the mobile terminal 2 displays the user-spoken content (recognition result) and the feedback content (operation information) fed back from the AI assistant server 4 on a screen of the touch panel 27. In FIG. 13, the comment displayed from the right side of the screen of the touch panel 27 of the mobile terminal 2 indicates the content spoken by the user to the mobile terminal 2. In FIG. 13, the comment displayed from the left side of the screen of the touch panel 27 of the mobile terminal 2 indicates the content fed back to the user from the AI assistant server 4. That is, when the mobile terminal 2 receives the feedback information from the AI assistant server 4, the mobile terminal 2 feeds back to the user using the audio output and using the screen display of the touch panel 27, in which the feedback of audio output can be omitted.

Among parameters, which parameters are required can be stored in advance in the storage unit of the AI assistant server 4. Further, which parameters are required parameters can be appropriately changed by the user by operating the operation unit 49 or by accessing the AI assistant server 4 via the network.

In an example case of FIG. 12, sections indicated by a diagonal line is spoken by a user (audio output by the user), sections without the diagonal line is spoken by the system (audio output by the system), and sections indicated by a hatched line is a message displayed on a screen of the mobile terminal 2 or spoken by the system (output by the system).

At first, when the system outputs an audio of "copy or scan?," the user speaks "copy" to instruct to use the copy function. Then, to request to input or enter a setting value for "copy" instructed by the user, the system outputs an audio of "if copying is performed using previous setting, speak "use previous setting"" using the mobile terminal 2. Further, the system displays, on the mobile terminal 2, a screen displaying messages of "if copying is performed using previous setting, speak "use previous setting"" and "previous setting value: monochrome, two copies, both faces" indicating the settings used for the previous printing.

Then, if the user speaks "use previous setting," which is a specific keyword, the system outputs a response of "Copying in monochrome for two copies, both faces. OK?" and demands or prompts the user to start the copying.

If the user speaks a response of "use previous setting" to the audio output or screen display of "if copying is performed using previous setting, speak "use previous setting,"" the system outputs the "input confirmation feedback" such as the above mentioned "Copying in monochrome for two copies, both faces. OK?" because the information required to execute the job is set sufficiently.

If the number of copies is to be changed, the user speaks "change to one copy" as the audio input. In this case, since the information required for executing the job is set, the system outputs "input confirmation feedback" such as "Copying in monochrome for one copy, both faces. OK?"

Then, if the user responds with "YES" to the "input confirmation feedback" such as "Copying in monochrome for two copies, both faces. OK?" or "Copying in monochrome for one copy, both faces. OK?," the system outputs a response of "Execute job" and executes the job instructed by the user.

### Flow of Interactive Operation:

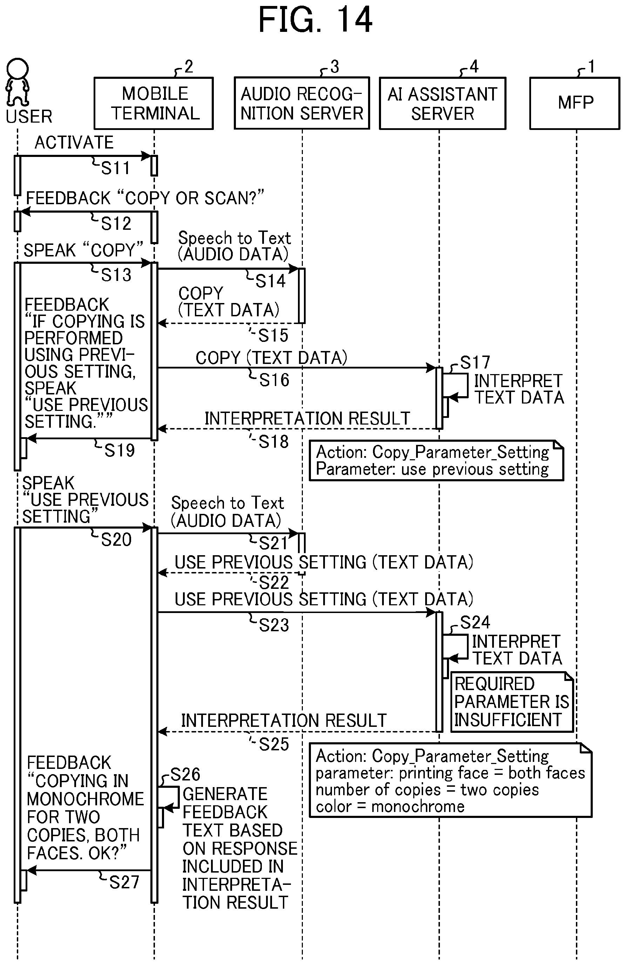

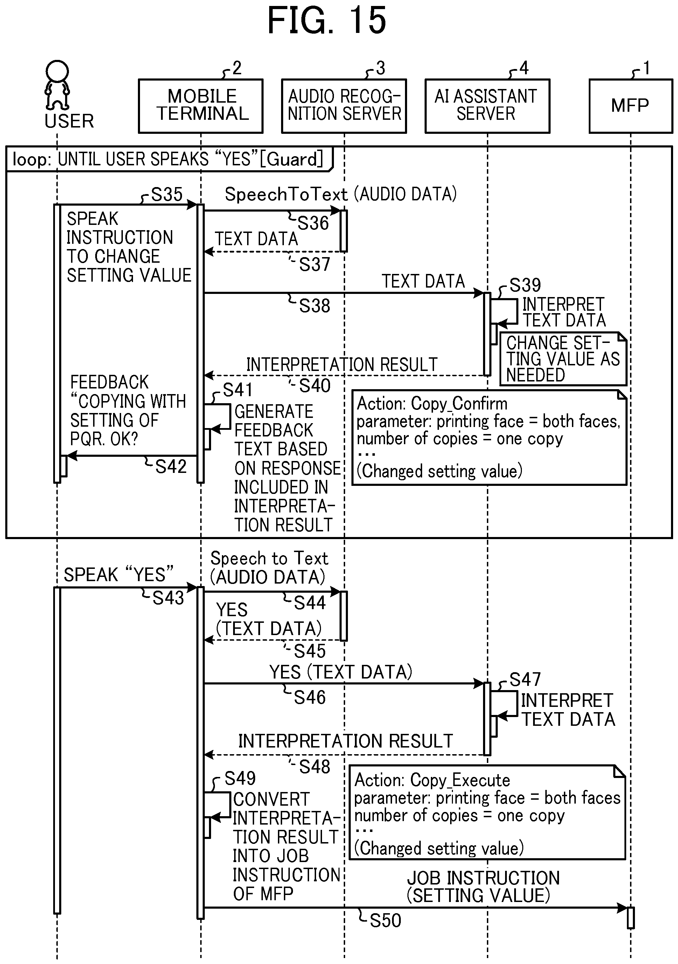

FIGs. 14 and 15 are sequence diagrams illustrating a flow of the interactive operation according to the first embodiment. The sequence diagram of FIG. 14 illustrates a flow of a first half of the interactive operation, and the sequence diagram of FIG. 15 illustrates a flow of a second half of the interactive operation.

At first, when the operation audio processing program of the mobile terminal 2 is activated by a user (step S11), the feedback unit 55 outputs a feedback of audio and screen display of "copy or scan?" (step S12).

The mobile terminal 2 displays a comment of "copy or scan?" on a screen of the touch panel 27 with the audio feedback in step S12. That is, the mobile terminal 2 displays the text data stored in the ROM 23 of the mobile terminal 2 in advance.

If the user speaks "copy" (step S13), the communication control unit 52 of the mobile terminal 2 transmits audio data of "copy" to the audio recognition server 3 with an audio-to-text conversion request (step S14).

Then, the text conversion unit 62 of the audio recognition server 3 converts the audio data of "copy" into text data, and then transmits the text data to the mobile terminal 2 (step S15).

The mobile terminal 2 displays the comment of "copy" on the screen of the touch panel 27 at the timing when the mobile terminal 2 receives the text data from the audio recognition server 3 in step S15. At this stage, the mobile terminal 2 can provide the audio feedback of "copy," or can omit the audio feedback of "copy."

In step S15, the acquisition unit 51 of the mobile terminal 2 acquires the text data from the audio recognition server 3.

Then, the communication control unit 52 of the mobile terminal 2 transmits the acquired text data to the AI assistant server 4 (step S16). As described with reference to FIGs. 10 and 11, the interpretation unit 72 of the AI assistant server 4 interprets the action and parameter based on the user-spoken phrase indicated by the received text data. In this example case, since the user only speaks "copy" alone, the number of copies is unknown (insufficient input).

Therefore, the interpretation unit 72 generates an interpretation result adding the Response of "if copying is performed using previous setting, speak "use previous setting"" to the Action of "Copy_Parameter_Setting" (step S17).

Then, the communication control unit 73 of the AI assistant server 4 transmits the interpretation result to the mobile terminal 2 (step S18).

Then, based on the interpretation result, the feedback unit 55 of the mobile terminal 2 outputs an audio of "if copying is performed using previous setting, speak "use previous setting"" via the speaker 28, and also instructs the touch panel 27 to display the text of "if copying is performed using previous setting, speak "use previous setting"" (step S19: input insufficient feedback).

The mobile terminal 2 displays the comment of "if copying is performed using previous setting, speak "use previous setting"" on the screen of the touch panel 27 along with the audio feedback in step S19. That is, the mobile terminal 2 displays the comment based on the response transmitted from the AI assistant server 4.

Then, the user speaks, for example, "use previous setting" (step S20).

Then, the communication control unit 52 of the mobile terminal 2 transmits audio data of "use previous setting" to the audio recognition server 3 with an audio-to-text conversion request (step S21).

Then, the text conversion unit 62 of the audio recognition server 3 converts the audio data of "use previous setting" into text data, and then transmits the text data to the mobile terminal 2 (step S22).

Then, the acquisition unit 51 of the mobile terminal 2 acquires the text data from the audio recognition server 3.

Then, the communication control unit 52 of the mobile terminal 2 transmits the acquired text data to the AI assistant server 4 (step S23). Then, the interpretation unit 72 of the AI assistant server 4 interprets the action and parameter based on the user-spoken phrase indicated by the received text data.

If the user speaks "use previous setting" to the mobile terminal 2, the interpretation unit 72 of the AI assistant server 4 reflects the job setting, which is pre-defined specific operation information executed in the past. At this stage, the interpretation unit 72 of the AI assistant server 4 can reflect one job setting that was executed most recently by referring to history information. Further, if two or more jobs were executed within a pre-set period of time, the AI assistant server 4 can instruct the user to choose which job condition is to be used.

The mobile terminal 2 displays the comment of "use previous setting" at the timing when the mobile terminal 2 receives the text data from the audio recognition server 3 in step S22. At this time, the mobile terminal 2 can provide the audio feedback of ""use previous setting," or can omit the audio feedback of "use previous setting."

The required parameters among a plurality of parameters can be stored in the storage unit such as the HDD 44 of the AI assistant server 4 in advance. In this case, based on information of the required parameters stored in the storage unit, the interpretation unit 72 can determine whether the parameters acquired from the mobile terminal 2 can be used to set all of the required parameters. If one or more of the required parameters have not been set, the interpretation unit 72 can demand or prompt the user to set the required parameters via the mobile terminal 2.

Since the state of insufficient required parameter for the copy job is solved in step S23, the interpretation unit 72 of the AI assistant server 4 generates an interpretation result adding the parameter of "color = monochrome," "printing face = both faces" and "number of copies = two" to the Action of "Copy_Confirm" (step S24).

Then, the communication control unit 73 of the AI assistant server 4 transmits the interpretation result to the mobile terminal 2 (step S25).

Since the state of insufficient required parameter for the copy job is solved, and it is ready to start the copying, the feedback unit 55 of the mobile terminal 2 generates a feedback text, for example, "Copying in monochrome for two copies, both faces. OK?" based on the response included in the interpretation result (step S26). The text can be generated by reading out all or a part of the text data stored in the storage unit of the mobile terminal 2 and combining the read-out text data. That is, if the recognition result of audio information is a specific keyword (in this example case, "use previous setting"), the feedback unit 55 of the mobile terminal 2 notifies the pre-defined specific operation information (in this example case, "monochrome, two copies, both faces") on the screen of the mobile terminal 2.

The feedback unit 55 can be configured to generate the feedback text not only in step 26 but also in any other steps in the same manner if the interpretation result is acquired from the AI assistant server 4, but if the feedback text information is included in the response of the interpretation result, the feedback unit 55 is not required to generate the feedback text.

Then, the above described input confirmation feedback is performed (step S27). In response to receiving this input confirmation feedback, the user performs an audio input for instructing a change of setting value and/or a start of copying.

As above described, the operation audio processing program displays the comment on the screen of the touch panel 27 of the mobile terminal 2 based on the text data stored in the mobile terminal 2 in advance, the text data received from the audio recognition server 3, and/or the response received from the AI assistant server 4.

In FIG. 15, a sequence diagram illustrating a flow of an operation when a change of setting value is instructed by an audio (e.g., voice) is indicated in steps S35 to S42.

In FIG. 15, if the user speaks an instruction of changing the setting value (step S35), the text conversion unit 62 of the audio recognition server 3 generates text data of the changed setting value and transmits the text data of the changed setting value to the AI assistant server 4 via the mobile terminal 2 (steps S36, S37, S38).

Then, the AI assistant server 4 generates an interpretation result including the changed setting value based on the user-spoken phrase indicated by the received text data (step S39), and then transmits the interpretation result to the mobile terminal 2 (step S40).

Then, the feedback unit 55 of the mobile terminal 2 generates a feedback text based on the response included in the interpretation result (step S41), and performs the above described input confirmation feedback, such as "Copying in monochrome for one copy, both faces. OK?" to check or confirm whether or not to start the copying with the changed setting value (step S42).

In FIG. 15, a sequence diagram illustrating a flow of an operation when the start of copying is instructed is indicated in steps S43 to S50.

That is, if the user responds with "YES" to the above described input confirmation feedback (step S43), audio data of "YES" is converted into text data by the audio recognition server 3, and then the text data is transmitted to the AI assistant server 4 via the mobile terminal 2 (steps S44, S45, S46).

If the AI assistant server 4 recognizes a copy start instruction based on the received text data, the AI assistant server 4 generates an interpretation result adding the parameter of "printing face = both faces, number of copies = one copy" to the Action of "Copy_Execute" and then transmits the interpretation result to the mobile terminal 2 (steps S47, S48).

Then, the interpretation result conversion unit 53 of the mobile terminal 2 converts the interpretation result into a job instruction of the MFP 1 (step S49), and then transmits the job instruction to the MFP 1 (step S50). Thus, the MFP 1 can be controlled for executing the copying using the above described audio input operation.

### Feedback Information from AI Assistant Server:

The following Table 2 illustrates an example of the interpretation result fed back to the mobile terminal 2 from the AI assistant server 4.

**Table 2**

| Name | Value | Processing by voice actions application |
|---|---|---|
| Action | COPY_PARAMETER_SETTING | Prompting to input job setting value |
| | COPY_CONFIRM | Prompting to confirm job setting value |
| | COPY_EXECUTE | Execution of copy job |
| Parameter | printing face | Change setting value of printing face |
| | number of copies | Change setting value of number of copies |
| | *parameter may include any value designatable as job setting value | |
| Response | Text | Feedback contents specified by text to user |

As illustrated in Table 2, the Action, such as
"COPY_PARAMETER_SETTING" for demanding or prompting a user to input a job setting value, "COPY_CONFIRM" for demanding or prompting a user to confirm a job setting value, and "Copy_Execute" for notifying a start of a copy job execution to a user are included in the interpretation result, and fed back to the mobile terminal 2.

The feedback unit 55 can determine the feedback to the user in accordance with the action, parameter, and response included in the interpretation result. In order to determine the content of feedback, the feedback unit 55 can be configured to store information corresponding to Table 2 in the storage unit of the mobile terminal 2 and refer to Table 2. Although an example case of copying is described for Table 2, the Action similar to Table 2 can be set for printing, scanning, and facsimile, such as "PARAMETER_SETTING" to demand or prompt a user to input a job setting value, and "CONFIRM" to demand or prompt a user to confirm a job setting value.

Further, the parameter, such as the setting value of printing face indicating both faces or one face, or the setting value of number of copies, and the like, can be included in the interpretation result, and then the interpretation result is fed back to the mobile terminal 2. Further, if the required parameter is insufficient, a message demanding or prompting an input of the insufficient parameter can be included in the interpretation result as the response, and then the interpretation result is fed back to the mobile terminal 2.

Further, the history information can be stored on the mobile terminal 2, but the history information can be stored in the AI assistant server 4, or can be stored in the MFP 1.

### When History Information is Stored in Mobile Terminal:

If the history information is stored in the mobile terminal 2 and the user speaks "use previous setting for copying," the audio data of "use previous setting" is converted into the text data by the audio recognition server 3, and then the text data is transmitted to the AI assistant server 4. Then, the AI assistant server 4 interprets the text data of "use previous setting for copying," and determines the job type is copy from the text of "copy," and sets the job condition by interpreting the text of "previous setting" based on the history information. Then, the AI assistant server 4 instructs the mobile terminal 2 to acquire the history information. For example, the AI assistant server 4 transmits, to the mobile terminal 2, "Action: Copy_Parameter_setting" and "Parameter: setting value = history information reference" as the interpretation result.

In response to receiving the interpretation result, the mobile terminal 2 reads out the history information stored in the storage unit such as the ROM 23 of the mobile terminal 2 to determine the job condition. The mobile terminal 2 can read out the history information in accordance with the job type, and reads out a history of copy job from the history information.

Further, the mobile terminal 2 may read out information of the most recent history or a plurality of histories executed within a pre-set period of time from the history information. If the plurality of history information is read out, the mobile terminal 2 displays the history as a comment on the screen of the mobile terminal 2, and demands or prompts a user to choose which job condition is to be executed. The user can make a selection of job condition by touching a selected comment or by speaking a phrase specifying the job condition.

If the mobile terminal 2 determines a specific job condition based on the history information, the determined specific job condition can be transmitted to the AI assistant server 4 (in this case, the determined specific job condition is not required to be transmitted through the audio recognition server 3). In this case, based on the determined specific job condition received from the mobile terminal 2, the AI assistant server 4 determines whether or not the required parameter is satisfied or sufficient. If the required parameter is satisfied, the AI assistant server 4 transmits, to the mobile terminal 2, "Action: Copy_Confirm," Parameter: color = color, printing face = both faces" as an interpretation result.

As indicated in FIG. 13, the mobile terminal 2, which has received the interpretation result, provides the feedback using the audio and/or screen display, such as "Copying in monochrome for two copies, both faces. OK?" as the input confirmation feedback. If the user responds with "YES" to the above input confirmation feedback, the AI assistant server 4 transmits, to the mobile terminal 2, "Action: Copy_Execute," "Parameter: Color = monochrome, printing face = both faces, number of copies = two," and then the mobile terminal 2 transmits the job execution instruction to the MFP 1 (this processing is the same as in steps S43 to S50 in FIG. 15). Further, if the user speaks, for example, "use color" for changing the setting value, the changed setting value can be reflected in the job condition (this processing is the same as in steps S35 to S42 in FIG. 15).

If the mobile terminal 2 determines the specific job condition based on the history information, the specific job condition can be included in the job execution instruction and transmitted to the MFP 1 without using the AI assistant server 4. On an operation screen of the MFP 1 that has received the job execution instruction, a screen reflecting the specific job condition can be displayed. Therefore, the user can change the job condition by operating the operation screen of the MFP 1.

In the above description, the user speaks "use previous setting," but the user can designate date and time, such as "use setting one hour ago" or "use setting of yesterday." In this case, the AI assistant server 4 interprets the designated date and time from the text specifying the date and time, such as "one hour ago" and "yesterday" included in the text data. Then, the AI assistant server 4 transmits, to the mobile terminal 2, an interpretation result including the designated date and time, such as "Action: Copy_Parameter_setting," "Parameter: setting value = history information reference, date = yesterday." Then, the mobile terminal 2 searches the history information using the designated date and time as a keyword and extracts the history information having the date and time that matches the designated date and time. If the plurality of history information is read out as above described, the mobile terminal 2 displays the history as the comment on the screen of the mobile terminal 2, and demands or prompts a user to choose which job condition is to be executed.

### When History Information is Stored in AI Assistant Server:

If the history information is stored in the AI assistant server 4 and the user speaks "use previous setting for copying," the AI assistant server 4 interprets the text data of "use previous setting for copying," and determines the job type is copy from the text of "copy," and sets the job condition by interpreting the text of "use previous setting" based on the history information. Then, the AI assistant server 4 acquires the history information from the storage unit such as the HDD 44 in the AI assistant server 4 or from a storage of an accessible external server.

The history information may be stored for each user of the mobile terminal 2. In this case, for example, the mobile terminal 2 transmits information (e.g., user ID) identifying a user when transmitting the text data of "use previous setting for copying" to the AI assistant server 4. Thus, the AI assistant server 4 can identify the user and read out the history information associated with the user. The AI assistant server 4 can read out the most-recent history information or a plurality of history information executed within a pre-set period of time from the history information.

When the most-recent history information is read out, the AI assistant server 4 transmits "Action: Copy_Confirm" and "Parameter: read-out job condition" as the interpretation result (this processing is the same as step S25 in FIG. 14, and the subsequent processing is the same as in steps S35 to S50 in FIG. 15).

If a plurality of history information is read out, for example, an interpretation result of "Action: Copy_Parameter_setting," and "Parameter: setting value = history 1, history 2" is transmitted to the mobile terminal 2. The "history 1" and "history 2" indicate the history of respective jobs, which were executed separately in the past or previously, in which two or more histories can be transmitted to the mobile terminal 2.

The mobile terminal 2 may display the history as a comment on the screen of the mobile terminal 2, and demand or prompt the user to choose which job condition is to be executed. The user can make a selection of job condition by touching a selected comment or by speaking a phrase specifying the job condition.

If the user of the mobile terminal 2 selects a specific job condition based on the history information, the selected specific job condition can be transmitted to the AI assistant server 4 (in this case, the selected specific job condition is not required to be transmitted through the audio recognition server 3). The subsequent processing is the same as in steps S35 to S50 in FIG. 15.

In the above description, the user speaks "use previous setting," but the user can designate date and time, such as "use setting one hour ago" or "use setting of yesterday." In this case, the AI assistant server 4 interprets the designated date and time from the text specifying the date and time, such as "one hour ago" and "yesterday" included in the text data.

Then, the AI assistant server 4 searches the history information using the designated date and time as a keyword and extracts the history information having the date and time that matches the designated date and time. If the plurality of history information is read out as above described, by transmitting the interpretation result to the mobile terminal 2 as described above, the mobile terminal 2 displays the history as the comment on the screen of the mobile terminal 2, and demands or prompts a user to choose which job condition is to be executed.

### When History Information is Stored in MFP:

If the history information is stored in the MFP 1 and the user speaks "use previous setting," the AI assistant server 4 determines that the required parameter is satisfied by interpreting the text of "use previous setting for copying," and then transmits "Action: Copy_Confirm" and the "Parameter: setting value = history information reference" to the mobile terminal 2.

Then, the mobile terminal 2 outputs the comment display and/or audio feedback of "use previous setting for copying. OK?," as the input confirmation feedback. If the user responds with "YES" to the above input confirmation feedback, "Action: Copy_Execute" and "Parameter: setting value = history information reference" are transmitted to the mobile terminal 2, and then the mobile terminal 2 transmits a job execution instruction to the MFP 1.

Then, the MFP 1 determines whether or not an instruction for referring to the history information is included in the job execution instruction. If the instruction referring to the history information is included in the job execution instruction, the MFP 1 displays a result of reflecting the job conditions including the job condition of the most-recent history on the operation screen of the MFP 1 and waits until the user performs an operation, such as pressing a start button. Further, a history list including a plurality of history information may be displayed on the operation screen to reflect the job condition included in the history selected by the user.

In the above description, the user speaks "use previous setting," but the user can designate date and time, such as "use setting one hour ago" or "use setting of yesterday." In this case, the AI assistant server 4 interprets the designated date and time from the text specifying the date and time, such as "one hour ago" and "yesterday" included in the text data. Then, the AI assistant server 4 transmits, to the mobile terminal 2, an interpretation result including the designated date and time, such as "Action: Copy_Execute," "Parameter: setting value = history information reference, date = yesterday," and then the mobile terminal 2 transmits the job execution instruction to the MFP 1.

Then, the MFP 1 searches the history information using the designated date and time as a keyword and extracts the history information having the date and time that matches the designated date and time. If the plurality of history information is read out as above described, the MFP 1 displays the plurality of history information on the operation screen as above described, and demands or prompts a user to choose which job condition is to be executed.

According to the first embodiment, if the settings used for the previous printing exist when the user uses the system that can perform an interactive operation using the MFP 1, the previous setting is displayed on the screen of the touch panel 27 of the mobile terminal 2. If the user speaks "use previous setting" by seeing the settings displayed on the touch panel 27 to reflect the previous setting, the printing using the previous setting can be performed by a single phrase, with which the job can be instructed with a smaller number of dialogues and intuitive manner when instructing the specific operation.

In the first embodiment, when copying is performed using the previous setting, a specific keyword, such as "use previous setting" is spoken, and then the AI assistant server 4 reflects the most-recent job condition, but not limited thereto.

For example, when a specific keyword, such as "normal setting" or "conference" is spoken to the mobile terminal 2, the AI assistant server 4 can reflect the job condition (hereinafter, registration condition) set for the pre-defined specific operation information that is registered in advance.

The registration condition can be stored in the mobile terminal 2, can be stored in the AI assistant server 4, or can be stored on the MFP 1.

### When Registration Condition is Stored in Mobile Terminal:

If the registration condition is stored in the mobile terminal 2 and the user speaks "use normal setting for copying," the audio data of "use normal setting for copying" is converted into the text data by the audio recognition server 3, and then the text data is transmitted to the AI assistant server 4.

Then, the AI assistant server 4 interprets the text data of "use normal setting for copying," and determines the job type is copy from the text of "copy," and sets the job condition by interpreting the text of "normal setting" based on the registration information. Then, the AI assistant server 4 instructs the mobile terminal 2 to acquire the registration condition. For example, the AI assistant server 4 transmits, to the mobile terminal 2, "Action: Copy_Parameter_setting" and "Parameter: setting value = registration condition reference" as an interpretation result (if a specific keyword such as "conference" is used for designation, the specific keyword is included in the parameter and transmitted).

In response to receiving the interpretation result, the mobile terminal 2 determines the job condition by reading out the registration condition stored in the storage unit, such as the ROM 23 of the mobile terminal 2. The mobile terminal 2 can read out the registration condition in accordance with the job type, and read out the registration condition of copy job from the registration condition in this case. If a specific keyword such as "conference" is used for designation, the mobile terminal 2 searches the registration condition corresponding to the specific keyword.

If the mobile terminal 2 determines a specific job condition based on the registration condition, the determined specific job condition can be transmitted to the AI assistant server 4 (in this case, the determined specific job condition is not required to be transmitted through the audio recognition server 3). In this case, the AI assistant server 4 determines whether or not the required parameter is satisfied or sufficient based on the specific job condition received from the mobile terminal 2. If the required parameter is satisfied, the AI assistant server 4 transmits, to the mobile terminal 2, "Action: Copy_Confirm," "Parameter : color = color, printing face = both faces, open direction = upper and lower, post-processing: staple, post-processing position: top two positions" as an interpretation result.

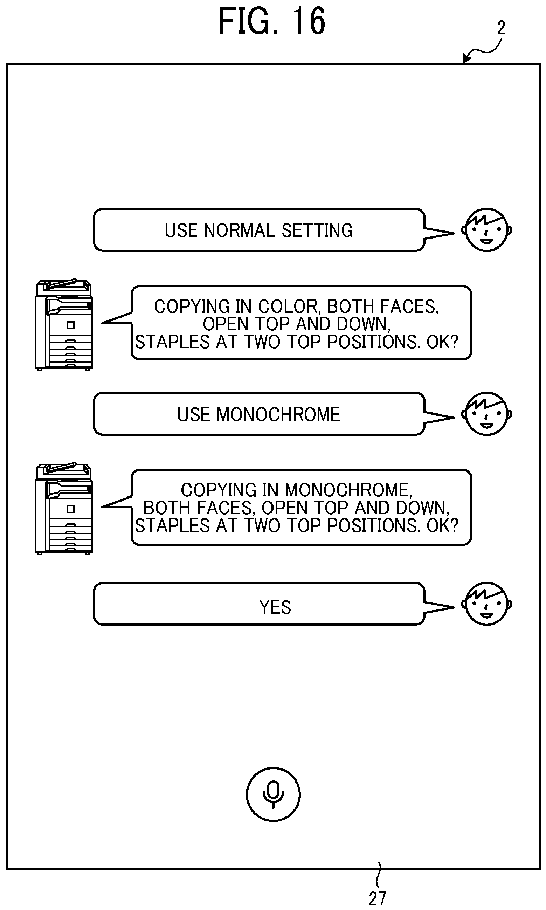

FIG. 16 is an example of a screen display when the mobile terminal 2 receives the above described interpretation result. As indicated in FIG. 16, the mobile terminal 2, which has received the interpretation result, provides an audio feedback and/or a screen display feedback of "copying in color, both faces, open top and down, staples at two top positions. OK?" as the input confirmation feedback.

If the user responds with "YES" to the above input confirmation feedback, the AI assistant server 4 transmits, to the mobile terminal 2, "Action: Copy_Execute," "Parameter : color = color, printing face = both faces, open direction = upper and lower, post-processing: staple, post-processing position: top two positions," and then the mobile terminal 2 transmits the job execution instruction to the MFP 1 (this processing is the same as in steps 43 to S50 in FIG. 15).

As indicated in FIG. 16, if the user speaks, for example, "use monochrome" for changing the setting value, the changed changing value can be reflected in the job condition (this processing is the same as steps S35 to S42 in FIG. 15).

The registration condition can be stored in the storage unit of the mobile terminal 2 in advance. Further, the registration condition can be registered by associating the specific keyword, such as "conference," in accordance with the registration condition. For example, a desired job condition can be set on the screen of the mobile terminal 2, and stored as the registration condition.

Further, job conditions of the jobs executed in the past or the jobs executed currently can be registered as the registration condition. In this case, for example, by touching the comment displayed on the screen, a screen indicating whether or not it is stored as the registration condition is displayed, and by operating the screen, the job condition (i.e., action and parameter received from the AI assistant server 4) corresponding to the comment can be stored. At this time, a specific keyword can be associated with the job condition to be stored. For example, the specific keyword can be set by operating the keyboard displayed on the screen of the mobile terminal 2.

Further, the user can speak "register setting value" for performing the registration. In this case, the AI assistant server 4 interprets the text, and transmits an interpretation result of "Action: Register" to the mobile terminal 2, and the mobile terminal 2 can store the most-recent job condition received from the AI assistant server 4 in the storage unit of the mobile terminal 2. At this time, the job condition to be stored in the storage unit of the mobile terminal 2 can be included as the parameter in the interpretation result and then transmitted to the mobile terminal 2.

### When Registration Condition is Stored in AI Assistant Server:

If the registration condition is stored in the AI assistant server 4 and the user speaks "use normal setting for copying," the AI assistant server 4 interprets the text data of "use normal setting for copying," and determines the job type is copy from the text of "copy," and sets the job condition by interpreting the text of "normal setting" based on the registration information. Then, the AI assistant server 4 acquires the registration condition from the storage unit of the HDD 44 in the AI assistant server 4 or from a storage of an accessible external server.

The registration condition may be stored for each user of the mobile terminal 2. In this case, for example, the mobile terminal 2 transmits information identifying a user (e.g., user ID) when transmitting the text data of "use normal setting for copying" to the AI assistant server 4. Then, the AI assistant server 4 can identify the user and read out the registration condition associated with the user (if a specific keyword, such as "conference," is designated, the registration condition corresponding to the specific keyword is searched).

When the registration condition is read out, the AI assistant server 4 transmits "Action: Copy_Confirm" and "Parameter: read-out job condition" as an interpretation result (this processing is the same as in step S25 in FIG. 14 and the subsequent processing is the same as in step S35 to S50 in FIG. 15).

The registration condition can be stored in the storage unit of the AI assistant server 4 in advance. Further, the registration condition can be registered by associating the specific keyword, such as "conference," in accordance with the registration condition. For example, a client computer can access the AI assistant server 4 to set the registration condition.

Further, job conditions of the jobs executed in the past or the jobs executed currently can be registered as the registration condition. In this case, by touching the comment displayed on the screen of the mobile terminal 2, a screen indicating whether or not it is stored as the registration condition is displayed, and by operating the screen, the job condition (i.e., action and parameter received from the AI assistant server 4) corresponding to the comment can be stored in the AI assistant server 4 based on the instruction from the mobile terminal 2.

That is, the mobile terminal 2 transmits the instruction to the AI assistant server 4 to register the currently-set job condition or the most-recent job condition at the AI assistant server 4. At this time, a specific keyword, such as "conference" can be transmitted together, and the AI assistant server 4 registers the job condition in association with the specific keyword if the keyword is received from the mobile terminal 2. Further, the job condition to be registered can be transmitted from the mobile terminal 2

Further, the user can speak "register setting value" for performing the registration. In this case, the AI assistant server 4 interprets the text data, and determines to execute the process of registering the currently-set job condition or the most-recent job condition. Further, if the user speaks "register setting value for conference," that is, if the spoken phrase includes a specific keyword, the job condition is registered by associating the specific keyword.

### When Registration Condition is Stored in MFP:

If the registration condition is stored in the MFP 1 and the user speaks "use normal setting for copying," the AI assistant server 4 interprets the text of "use normal setting for copying," and determines that the required parameter is satisfied, and then the AI assistant server 4 transmits, to the mobile terminal 2, "Action: Copy_Parameter_setting" and "Parameter: setting value = registration condition reference" as an interpretation result (if a specific keyword such as "conference" is used for designation, the specific keyword is included in the parameter and then transmitted).

Then, the mobile terminal 2 outputs the comment display and/or audio feedback of "use normal setting for copying. OK?" as the input confirmation feedback.

If the user responds with "YES" to the above input confirmation feedback, "Action: Copy_Execute" and "Parameter: setting value = registration condition reference" are transmitted to the mobile terminal 2, and then the mobile terminal 2 transmits a job execution instruction to the MFP 1.

Then, the MFP 1 determines whether or not an instruction for referring to the registration condition is included in the job execution instruction. If the instruction for referring to the registration condition is included in the job execution instruction, the MFP 1 displays a result of reflecting the job condition included in the registration condition on the operation screen of the MFP 1 and waits until the user performs an operation, such as pressing a start button (if a specific keyword such as "conference" is used for designation, the registration condition corresponding to the specific keyword is searched).

The registration condition can be stored in the storage unit of the MFP 1 in advance. Further, the registration condition can be registered by associating with the specific keyword, such as "conference," in accordance with the registration condition. For example, by operating the operation unit of the MFP 1 or accessing the MFP 1 from a client computer, the registration information can be set. Further, job conditions of the jobs executed in the past or the jobs executed currently can be registered as the registration condition. In this case, for example, by operating the operation unit of the MFP 1 at the timing when the job condition is set in the MFP 1, the job condition being set can be registered.

For example, in the above described first embodiment, the audio recognition server 3 generates the text data corresponding to the user-spoken phrase, and the AI assistant server 4 interprets the operation intended by the user based on the text data. However, the mobile terminal 2 can be provided with the audio recognition function and the interpretation function to interpret the operation intended by the user-spoken phrase using the mobile terminal 2. With this configuration, the audio recognition server 3 and the AI assistant server 4 can be omitted, with which the system configuration can be simplified.

### Second Embodiment:

Hereinafter, a description is given of a second embodiment.

Different from the first embodiment, the second embodiment uses a smart speaker in place of the mobile terminal 2. In the description of the second embodiment, the description of the same part as the first embodiment will be omitted, and a description will be given of a different part from the first embodiment.

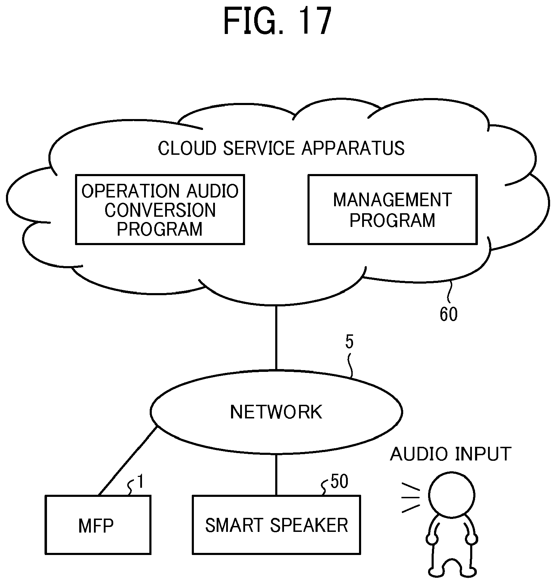

FIG. 17 is an example diagram of a system configuration of an audio-based operation system according to the second embodiment. As indicated in FIG. 17, the audio-based operation system uses a smart speaker 50 (an example of information processing apparatus) in place of the mobile terminal 2 described in FIG. 1. The smart speaker, known as artificial intelligent (AI) speaker, is a speaker having an AI assistant function that supports an interactive audio-based operation or audio-use operation.

As indicated in FIG. 17, the audio-based operation system is configured by connecting a plurality of apparatuses, such as the MFP 1 (an example of target apparatus), the smart speaker 50 (an example of information processing apparatus), a cloud service apparatus 60 using, for example, a network 5 such as local area network (LAN). The target apparatus is not limited to the MFP, but can be various apparatuses or devices including office devices, such as electronic blackboards and projectors.

The smart speaker 50 receives an audio (e.g., voice) input from a user used for performing an audio-based operation (audio-use operation) of the MFP 1, in which the smart speaker 50 may be disposed close to the MFP 1. Further, the smart speaker 50 and the MFP 1 can be associated with each other one to one. Therefore, the smart speaker 50 provides information of one or more functions of the MFP 1 to the user who is operating the smart speaker 50 in front of the MFP 1. However, the smart speaker 50 can be associated with a plurality of the MFPs and/or other electronic devices.

The cloud service apparatus 60, such as a physical server, can be implemented by a plurality of servers. The cloud service apparatus 60 is a control apparatus, in which an operation audio conversion program for converting audio data into text data and interpreting an intention of user is installed. Further, the cloud service apparatus 60 is the control apparatus installed with a management program (control program) for managing or controlling the MFP 1. Therefore, the cloud service apparatus 60 performs the same functions as the audio recognition server 3 and the AI assistant server 4 according to the first embodiment.

The operation audio conversion program creates and registers an operation audio dictionary for audio-based operation and operations set for the MFP 1. The management program associates accounts and devices such as the smart speaker 50 and the MFP 1 to manage or control the entire system.

### Hardware Configuration of Smart Speaker:

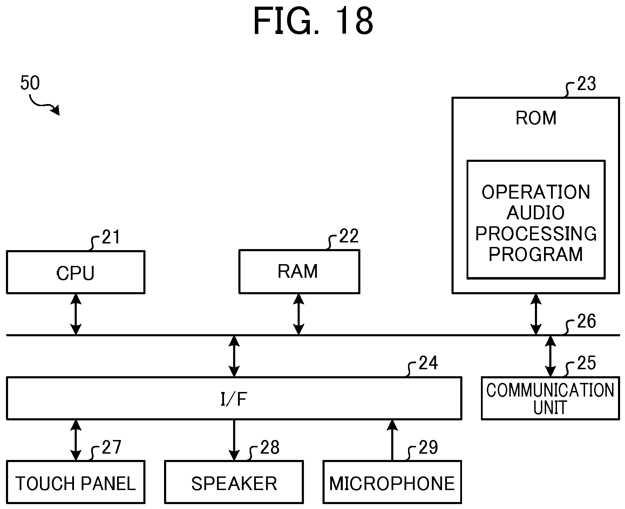

FIG. 18 is an example block diagram of a hardware configuration of the smart speaker 50 provided in the audio-based operation system. Similar to the mobile terminal 2 illustrated in FIG. 3, the smart speaker 50 incudes, for example, the CPU 21, the RAM 22, the ROM 23, the interface (I/F) 24, and a communication unit 25 connected with each other via the bus line 26 as illustrated in FIG. 18.

The ROM 23 stores the operation audio processing program. By executing the operation audio processing program using the CPU 21, the audio input operation for operating the MFP 1 can be performed.

The I/F 24 is connected to the touch panel 27, the speaker 28, and the microphone 29. The microphone 29 collects (acquires) an input audio indicating a job execution instruction to the MFP 1 in addition to communication audio, such as voice. The input audio is transmitted to the cloud service apparatus 60 via the communication unit 25 and converted into text data in the cloud service apparatus 60.

### Hardware Configuration of Cloud Service Apparatus:

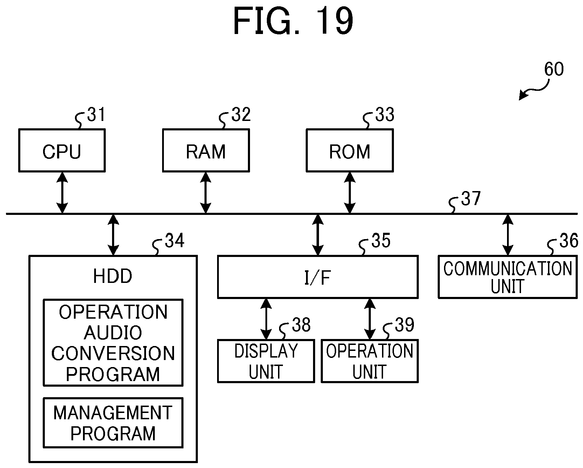

FIG. 19 is an example block diagram of a hardware configuration of the cloud service apparatus 60 provided in the audio-based operation system. In FIG. 19, it is assumed that the cloud service apparatus 60 is configured by a single server. As similar to the audio recognition server 3 described in FIG. 4, the cloud service apparatus 60 is configured by connecting the CPU 31, the RAM 32, the ROM 33, the HDD 34, the interface (I/F) 35 and the communication unit 36 with each other via the bus line 37 as indicated in FIG. 19. The I/F 35 is connected to a display unit 38 and an operation unit 39. The HDD 34 stores the operation audio conversion program for creating and registering the operation audio dictionary for audio-based operation and the operations set for the MFP 1. Further, the HDD 34 stores a management program that associates the account and devices such as the smart speaker 50 and the MFP 1 to manage or control the entire system. By executing the operation audio conversion program and the management program using the CPU 31, the MFP 1 can be operated based on audio data transmitted from the mobile terminal 2.

### Functional Configuration of System:

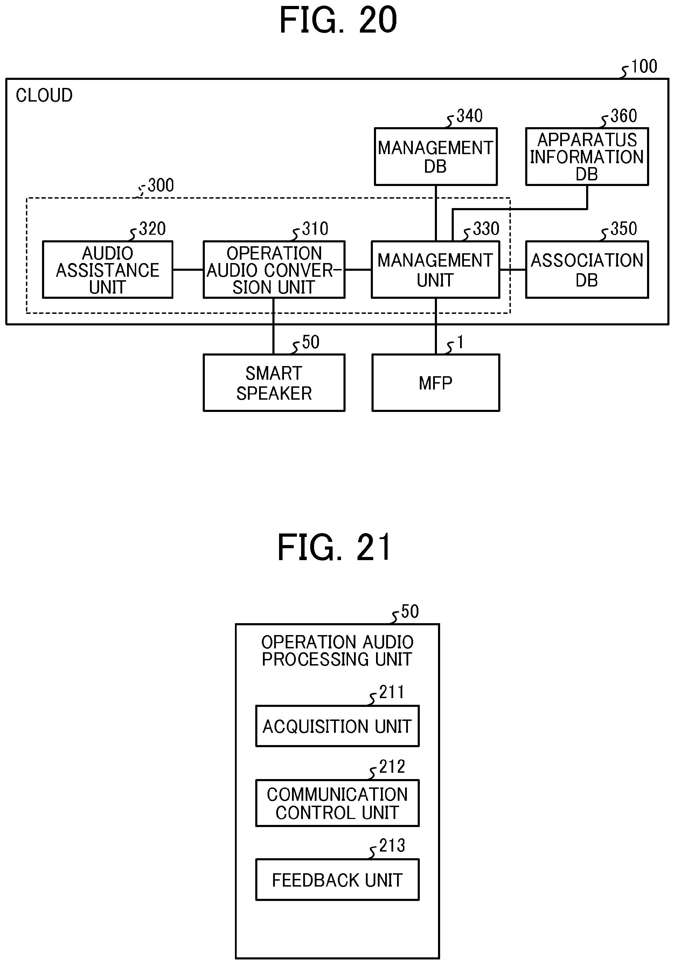

FIG. 20 is an example block diagram of a functional configuration of a cloud service according to the second embodiment. FIG. 20 indicates main functions of the cloud service. The details of the main functions and the description of functions of the smart speaker 50 indicated in FIG. 20 will be described later with reference to FIGs. 21 to 22.

The functions of a cloud 100 can be implemented by one cloud service apparatus 60 or by a plurality of cloud service apparatuses 60. These functions are set appropriately for one or more cloud service apparatus 60, such as one cloud service apparatus 60 and a plurality of cloud service apparatuses 60.

The CPU 31 of the cloud service apparatus 60 functions as an operation audio conversion unit 310 by executing the operation audio conversion program read out from the HDD 34 on the RAM 32. The operation audio conversion unit 310 has a function of converting audio data into text data. Further, the operation audio conversion unit 310 has a function of determining whether or not the text data matches the pre-defined dictionary information. Further, if the text data matches the pre-defined dictionary information, the operation audio conversion unit 310 has a function of converting the text data into a parameter indicating variables such as an action and a job condition corresponding to an intention of user.

Further, the CPU 31 of the cloud service apparatus 60 functions as an audio assistant unit 320 by executing the audio assistant program read out from the HDD 34 on the RAM 32. The audio assistant unit 320 has a function of retaining the dictionary information.

Further, the CPU 31 of the cloud service apparatus 60 functions as a management unit 330 by executing the management program read out from the HDD 34 on the RAM 32. The management unit 330 has a function of converting the action and the parameter into a job execution instruction described in a format interpretable by the MFP 1, and then transmitting the job execution instruction to the registered MFP 1.

In this manner, the cloud 100 provides a cloud service 300 using the function of at least the operation audio conversion unit 310, the audio assistant unit 320 and the management unit 330.

The cloud service 300 stores various information in a database (DB) based on communication between the MFP 1 and the information processing apparatus. For example, the management unit 330 manages or controls various information by using a management DB 340, an association DB 350, and an apparatus information DB 360

The management DB 340 stores content (e.g., data), such as text data, image data, audio data, or the like provided by the cloud service 300.

The association DB 350 stores information of one or more target apparatuses associated with one or more information processing apparatuses. In this disclosure, the association DB 350 stores, for example, device identification (ID) identifying the device used as the information processing apparatus (e.g., smart speaker 50) and apparatus identification (ID) identifying the target apparatus (e.g. MFP 1) associated with the device (e.g., smart speaker 50), in association with each other. In this description, the device ID identifying the device (e.g., smart speaker 50) may be referred to as first identification information and the apparatus ID identifying the target apparatus (e.g. MFP 1) may be referred to as second identification information. The smart speaker 50 and the target apparatus (e.g. MFP 1) may be associated with each other by one-to-one, but the smart speaker 50 and the plurality of target apparatuses may be associated with each other. That is, the type and number of target apparatuses that are associated with the device ID are not limited to a particular type and number.

Further, the method of associating the target apparatus (e.g. MFP 1) and the smart speaker 50 is not limited to the above method. That is, a method of associating information identifying a user, such as user account and user ID, and the target apparatus can be employed. In this method, the information (e.g. device ID) identifying the smart speaker 50, transmitted from the smart speaker 50 to the cloud 100, and the information identifying the user can be stored in the association DB 350 of the cloud 100, and then the management unit 330 specifies or identifies a specific target apparatus based on the information identifying the user associated with the device ID.

Alternatively, the smart speaker 50 can transmit information identifying the user in place of the device ID. Further, in place of the information identifying the user, information identifying an organization such as department and company, or information identifying a place such as room and building, can be associated with the target apparatus each other, in which one or more smart speakers 50 and one or more target apparatuses may be associated with each other.

The apparatus information DB 360 stores the apparatus ID of each of the respective target apparatuses, including the MFP 1, and the apparatus information of the respective target apparatuses.

### Function of Smart Speaker:

FIG. 21 is an example block diagram of a functional configuration of the smart speaker 50. The CPU 21 of the smart speaker 50 executes the operation processing program stored in the ROM 23 to implement functions, such as an acquisition unit 211, a communication control unit 212 and a feedback unit 213 as indicated in FIG. 21.

The acquisition unit 211 acquires an audio instruction input by a user collected via the microphone 29 (see FIG. 3), which is used for an audio-based operation of the MFP 1. The acquisition unit 211 may acquire the user operation via the touch panel 27 (see FIG. 3) and a physical switch.

The communication control unit 212 controls communication between the smart speaker 50 and the cloud 100. The communication control unit 212 communicates with the cloud 100 to transmit information acquired by the acquisition unit 211 to the cloud 100, and to acquire text data, image data, and audio data from the cloud 100. Further, when the communication control unit 212 transmits the information acquired by the acquisition unit 211 to the cloud 100, the communication control unit 212 may transmit the device ID identifying the smart speaker 50 together with the information.

To implement the interactive audio input operation, the feedback unit 213 provides a feedback to the user, such as audio (e.g., voice) to instruct to input the insufficient data, and audio (e.g., voice) to confirm the input information or data. Further, the feedback unit 213 may provide the feedback to the user using text or image by controlling the displaying on the touch panel 27.

In this example case, the acquisition unit 211 to the feedback unit 213 are implemented by software, but a part or all of the acquisition unit 211 to the feedback unit 213 can be implemented by hardware, such as integrated circuit (IC). Further, each function of the acquisition unit 211 to the feedback unit 213 can be implemented by the operation audio processing program alone, or a part of the functions implemented by the acquisition unit 211 to the feedback unit 213 can be implemented by using other programs, or the functions implemented by the acquisition unit 211 to the feedback unit 213 can be implemented indirectly by executing other programs.

### Function of Cloud Service:

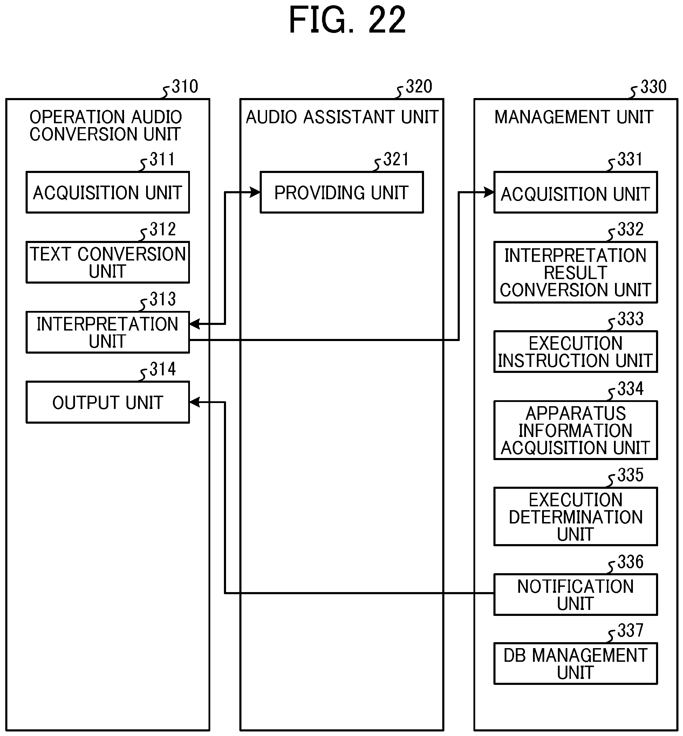

FIG. 22 is an example of a functional block diagram illustrating each functional unit implemented by the cloud service. As indicated in FIG. 22, the operation audio conversion unit 310 includes, for example, an acquisition unit 311, a text conversion unit 312, an interpretation unit 313, and an output unit 314.

The acquisition unit 311 acquires audio data transmitted from the smart speaker 50, such as audio data input by a user. Further, the acquisition unit 311 can acquire data indicating an operation performed by the user to the touch panel 27 and a physical switch (including buttons) of the smart speaker 50.

The text conversion unit 312 includes, for example, Speech-To-Text (STT) that converts the audio data (audio data input by a user at the smart speaker 50) into text data.

The interpretation unit 313 interprets the content of user instruction based on the text data converted by the text conversion unit 312. Specifically, the interpretation unit 313 checks whether or not a phrase (e.g., word) included in the text data converted by the text conversion unit 312 matches the dictionary information provided by the audio assistant unit 320, and converts the phrase (e.g., word) included in text data into the parameter indicating variables, such as action indicating a job type and job condition. Then, for example, the interpretation unit 313 transmits the action and the parameter to the management unit 330 together with the device ID identifying the smart speaker 50, which is the acquisition source of the audio data.

The output unit 314 includes, for example, Text-To-Speech (TTS) that synthesizes text data into audio data. The output unit 314 controls the communication unit 36 (FIG. 4) to transmit data, such as text data, audio data, and image data, to the smart speaker 50.

In this example case, the acquisition unit 311 to the output unit 314 are implemented by software, but a part or all of the acquisition unit 311 to the output unit 314 can be implemented by hardware, such as integrated circuit (IC). Further, the functions implemented by the acquisition unit 311 to the output unit 314 can be implemented by the operation audio processing program alone, or a part of the functions implemented by the acquisition unit 311 to the output unit 314 can be implemented by using other programs, or the functions implemented by the acquisition unit 311 to the output unit 314 can be implemented indirectly by executing other programs.

Further, a part or all of the functions of the interpretation unit 313 of the operation audio conversion program can be implemented by using the audio assistant program. In this case, for example, the audio assistant unit 320 checks whether a phrase (e.g., word) included in text data matches the dictionary information, and if the phrase (e.g., word) included in the text data matches the dictionary information, the audio assistant unit 320 convert the phrase (e.g., word) included in the text data into the parameter indicating variables, such as an action indicating a user intention and a job condition. The interpretation unit 313 acquires the action and the parameter from the audio assistant unit 320.

The audio assistant unit 320 includes a function of a providing unit 321 as indicated in FIG. 22. The providing unit 321 manages or controls dictionary information defining the relationship between the text data, action and parameter in advance, and provides the dictionary information to the operation audio conversion unit 310.

The audio assistant unit 320 receives the text data from the operation audio conversion unit 310 and interprets the user-instructed operation from the text data. For example, the audio assistant unit 320 acquires the text data from the interpretation unit 313 and checks whether or not the phrase (e.g., word) included in the text data matches the dictionary information, and converts the phrase (e.g., word) included in the text data to the action and the parameter if the phrase included in the text data matches the dictionary information. Then, the audio assistant unit 320 provides the action and parameter to the interpretation unit 313.

In this example case, the audio assistant unit 320 (including the providing unit 321) is implemented by software, but a part or all of the audio assistant unit 320 can be implemented by hardware, such as integrated circuit (IC). Further, the function implemented by the providing unit 321 can be implemented by the audio assistant program alone, or a part of function implemented by the providing unit 321 can be implemented by using other programs, or function implemented by the providing unit 321 can be implemented indirectly by executing other programs.

As indicated in FIG. 22, the management unit 330 includes, for example, an acquisition unit 331, an interpretation result conversion unit 332, an execution instruction unit 333, an apparatus information acquisition unit 334, an execution determination unit 335, a notification unit 336, and a DB management unit 337.

The acquisition unit 331 acquires the interpretation result from the interpretation unit 313.

The interpretation result conversion unit 332 converts the interpretation result, such as the action and parameter, converted by the operation audio conversion unit 310, into a job execution instruction interpretable by the MFP 1.

The execution instruction unit 333 instructs the MFP 1 to execute the job by transmitting the job execution instruction to the MFP 1. Specifically, the execution instruction unit 333 acquires the device ID of the smart speaker 50, which has received the audio instruction spoken by the user, along with the action and parameter.

The execution instruction unit 333 searches the MFP 1 associated with the acquired device ID from the association DB 350 (FIG. 20), and transmits the job execution instruction to the searched MFP 1.

The apparatus information acquisition unit 334 acquires the apparatus information from each of the registered target apparatuses (e.g., MFP 1). For example, the apparatus information acquisition unit 334 acquires information indicating processing capability, such as the maximum number of pixels processable at the target apparatuses (e.g., MFP 1).

Further, the apparatus information acquisition unit 334 acquires apparatus state information including connection state information indicating whether a communication connection with the MFP 1 has been established, power state information such as ON and OFF state of the power supply of the MFP 1 or sleep mode of the MFP 1, information on existence/non-existence of error and type of error, residual state information of consumable such as sheet and toner, user login state information, and access right information indicating one or more functions that are allowed to be used by a log-in user, or the like.

If the apparatus information acquisition unit 334 acquires the apparatus information, such as processing capability from the plurality of MFPs 1, the apparatus information acquisition unit 334 manages or controls the respective apparatus information by associating the apparatus information with identification information (e.g., ID) identifying each target apparatus, in the apparatus information DB 360 (FIG. 20).

The execution determination unit 335 compares the processing capability of the MFP 1 and a job designated by a user (i.e., action and parameter generated by the operation audio conversion unit 310) to determine whether the job designated by the user is executable by using the processing capability of the MFP 1. If the execution determination unit 335 determines that the job designated by the user is executable using the processing capability of the MFP 1, the execution determination unit 335 transmits the job execution instruction to the MFP 1. Further, if the execution determination unit 335 determines that the job designated by the user is not executable using the processing capability of the MFP 1, the execution determination unit 335 feeds back response information such as an error message to the smart speaker 50 via the communication unit 336 and the operation audio conversion unit 310.

The notification unit 336 notifies the text data, audio data, image data, or the like to the operation audio conversion unit 310 as the response to the job execution instruction by the user. Further, if the parameter indicating the job condition to be used for executing the job is insufficient, the notification unit 336 provides a feedback to the smart speaker 50 via the operation audio conversion unit 310 to demand or prompt the user to input the insufficient parameter. In this case, the parameter information can be transmitted as the information that is necessary to check and confirm the insufficient parameter, or the text data, audio data, and image data can be transmitted as the information necessary to demand or prompt the user to designate the parameter.

The DB management unit 337 manages or controls the management DB 340, the association DB 350, and the apparatus information DB 360. Specifically, the DB management unit 337 sets various tables, and registers, searches or retrieves, deletes, and updates data of various tables. For example, the DB management unit 337 associates and registers the device ID of the smart speaker 50 and the apparatus ID of the MFP 1 in the association DB 350 based on the information and instruction input into the MFP 1, the smart speaker 50, or a client apparatus of the cloud service apparatus 60. The association DB 350 retains or stores the information by associating the device ID of the smart speaker 50 and the apparatus ID of the MFP 1 using the table data or the like.

### Flow of Interactive Operation:

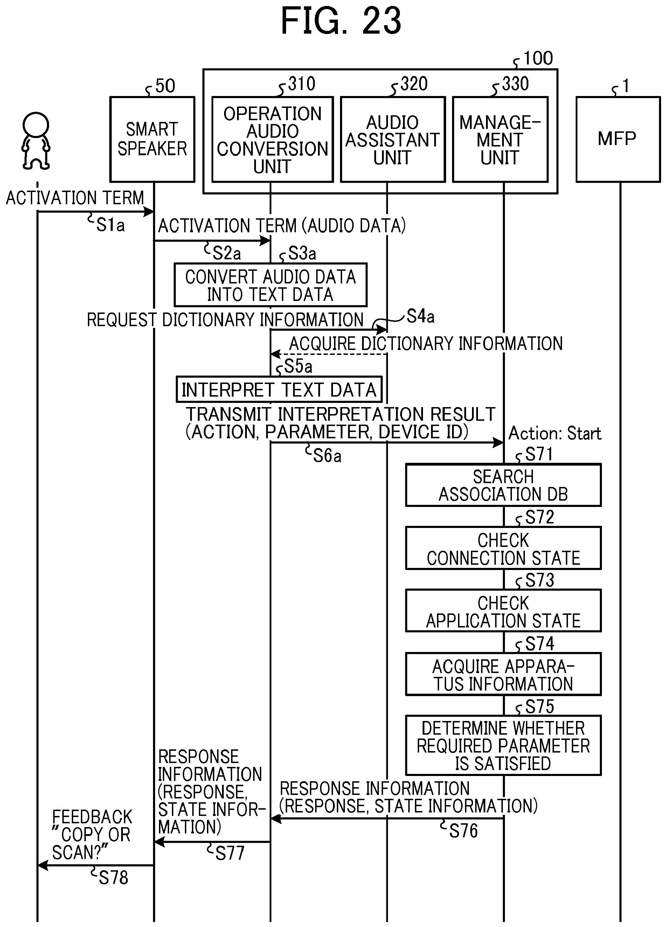

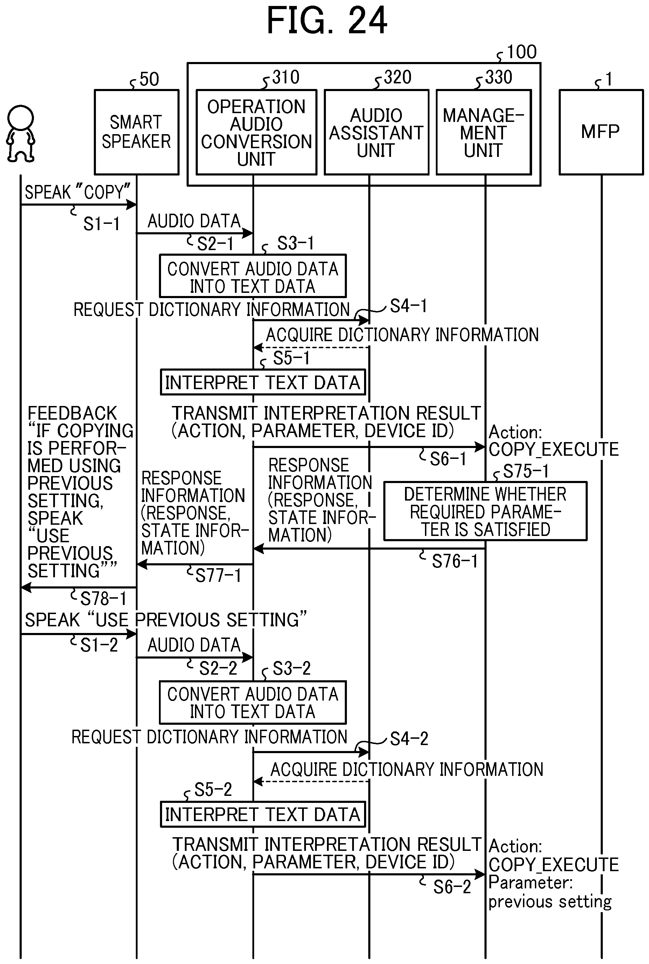

FIGs. 23 to 26 are an example of an operation of the audio-based operation system when a user interacts with the system to operate the MFP 1. FIG. 23 is an example of a flow of an activation operation, and FIGs. 24 to 26 are examples of a flow of the interactive operation after the activation. If a user performs an operation using an interacting operation with the system, a dialogue session is required to be controlled. The control of dialogue session will be described later. In this example case, a user operates the smart speaker 50 to instruct an operation of copying of color image on both faces for two copies by opening top and down and stapling at two top positions. In this example case, the number of copies (e.g., two copies) is the required parameter, but not limited thereto. For example, the required parameter can include a plurality of parameters, such as monochrome, color, and sheet size.

In FIG. 23, at first, a user activates the operation audio processing program of the smart speaker 50, and the user inputs an activation phrase (e.g., term, word) to the smart speaker 50 by speaking the activation phrase (step S1a). For example, if the user speaks the activation phrase (e.g., term, word) to activate the audio assistant program, the audio assistant program can be activated.

Then, the smart speaker 50 (communication control unit 212) transmits audio data of the activation phrase to the cloud 100 (operation audio conversion unit 310) (step S2a).

In the cloud 100, the operation audio conversion unit 310 (acquisition unit 311) acquires the audio data transmitted from the smart speaker 50, and the operation audio conversion unit 310 (text conversion unit 312) converts the audio data into text data (step S3a).

Then, the operation audio conversion unit 310 (interpretation unit 313) requests the dictionary information to the audio assistant unit 320 (providing unit 321) to acquire the dictionary information from the audio assistant unit 320 (providing unit 321) (step S4a).

Then, the operation audio conversion unit 310 (interpretation unit 313) performs the text data interpretation using the acquired dictionary information (step S5a).

Then, the operation audio conversion unit 310 (interpretation unit 313) transfers the interpretation result to the management unit 330 (step S6a).

Then, the management unit 330 performs steps of searching (step S71), connection state confirmation (step S72), application state confirmation (step S73), apparatus information acquisition (step S74) from the association DB 350, as needed. The order of the processing of steps S71 to S74 can be changed appropriately. Further, each of the processing of steps S71 to S74 can be omitted if each processing of steps S71 to S74 is performed at a different timing.

In step of searching of the association DB 350 (step S71), the management unit 330 (DB management unit 337) searches and acquires the MFP 1 (i.e., apparatus ID of the MFP 1) associated with the acquired device ID (device ID of smart speaker 50) from the association DB 350. In step S71, if the apparatus ID of the MFP 1 (communication target apparatus) associated with the device ID is not acquired by the searching, the management unit 330 (notification unit 336) notifies the user via the operation audio conversion unit 310 (output unit 314) that the smart speaker 50 is not associated with the MFP 1 (communication target apparatus). For example, the management unit 330 (notification unit 336) generates response information including a response of "this device is not associated with a communication target apparatus." Further, the management unit 330 (notification unit 336) may include a method of associating the device (e.g., smart speaker 50) and the communication target apparatus (e.g., MFP 1) in the response. Step S71 may be performed at any other timing when acquiring the device ID.

In step of connection state confirmation (step S72), the management unit 330 confirms the apparatus state of the communication target apparatus (e.g., MFP 1). For example, the DB management unit 337 refers to the apparatus information acquired and stored in the apparatus information DB 360 to check the apparatus state. Further, the apparatus information acquisition unit 334 can acquire the apparatus information from the communication target apparatus (e.g., MFP 1) to check the apparatus state. The check or confirmation of apparatus state means, for example, a check or confirmation whether or not the communication with the communication target apparatus (e.g., MFP 1) can be performed, and whether the communication target apparatus (e.g., MFP 1) can be used or not. If the connection to the MFP 1 (confirmation target apparatus) to be associated the device ID is not yet established, or if the MFP 1 (confirmation target apparatus) cannot be used due to the activation of the MFP 1, the management unit 330 (notification unit 336) notifies the apparatus state to the user via the operation audio conversion unit 310 (output unit 314). For example, the management unit 330 (notification unit 336) generates and notifies response information including a response of "apparatus is offline" or "apparatus is being prepared." Further, the management unit 330 (notification unit 336) may include a countermeasure method in the response. The check or confirmation of apparatus state may be performed at any other timing when the action, the parameter and the device ID are acquired from the operation audio conversion unit 310 (interpretation unit 313).

In step of application state confirmation (step S73), the management unit 330 checks the state of application that executes the function specified by the user at the MFP 1 (communication target apparatus). For example, the DB management unit 337 refers to the apparatus information acquired and stored in the apparatus information DB 360 to check the state of application. Alternatively, the apparatus information acquisition unit 334 may acquire the apparatus information from the MFP 1 (communication target apparatus) to check the state of application. The check or confirmation of application state is performed, for example, to check or confirm whether or not the application is installed and whether the application is ready to be executed or not.

If the function of copy is instructed to be executed, and an application related to the copying is not installed on the MFP 1 associated with the device ID, or an application cannot be used due to the activation, the management unit 330 (notification unit 336) notifies the application state to the user via the operation audio conversion unit 310 (output unit 314). For example, the management unit 330 (notification unit 336) generates and notifies response information including a response of "application is not installed" or a response of "application is not currently available." Further, the management unit 330 (notification unit 336) may include a countermeasure method in the response. The check or confirmation of application state may be performed at any other timing when the action, the parameter and the device ID are acquired from the operation audio conversion unit 310 (interpretation unit 313).

In step of apparatus information acquisition (step S74), the management unit 330 acquires the apparatus information of the communication target apparatus (e.g., MFP 1). For example, the DB management unit 337 acquires the apparatus information acquired and stored in the apparatus information DB 360 in advance. Further, the apparatus information acquisition unit 334 may acquire the apparatus information from the communication target apparatus (e.g., MFP 1). The acquired apparatus information is used, for example, for determining whether or not the job type and job condition instructed by the user can be executed at the communication target apparatus (e.g., MFP 1).

If the processing of steps S71 to S74 are completed at any timing after the activation, the management unit 330 (execution determination unit 335) determines whether the required parameter is satisfied or sufficient (step S75). In step of determining whether the required parameter is satisfied or sufficient, the management unit 330 (execution determination unit 335) determines whether all of the conditions required for executing the job are satisfied based on the action and parameter included in the interpretation result.

When the job type and the required setting conditions are all specified when to activate the audio assistant program, the following steps for "input feedback" can be omitted, and the MFP 1 can be instructed to execute the job.

At this stage, since the activation is instructed by the audio spoken by the user and the user does not yet receive the specification of multiple actions and parameters set for the MFP 1, the management unit 330 (execution determination unit 335) determines that the required parameter is not satisfied or sufficient. The management unit 330 (execution determination unit 335) determines that the required parameter is not satisfied when the required condition is missing when instructing the activation of the audio assistant program. Accordingly, the management unit 330 (notification unit 336) generates response information and transmits the response information to the smart speaker 50 via the operation audio conversion unit 310 (output unit 314) (steps S76, S77).

The management unit 330 (DB management unit 337) manages or controls the communication session with the smart speaker 50 using the management DB 340. When transmitting the response information to the smart speaker 50, the management unit 330 (notification unit 336) can transmit state information indicating that the session is being continued. The state information is information indicating that the session is being continued. Although some description is omitted in the subsequent steps, when the cloud 100 inquires the smart speaker 50, the cloud 100 transmits the inquiry including the state information to the smart speaker 50.

The response information may include text data, audio data, and image data as the content to be inquired to the user. In this example case, the audio data of "copy or scan?" is transmitted.

Then, the smart speaker 50 (feedback unit 213) outputs a feedback of "copy or scan?" using an audio (step S78).

The content of feedback is not limited thereto, but a message demanding or prompting the user to enter or input the job type and/or the job setting condition can be used. Further, the feedback to the user may be performed by displaying text or image on the touch panel as well as the audio output. In this case, the text data and image data (display information) are transmitted to the smart speaker 50.

After step S78, if the user speaks a phrase of "copy" (same as in a case that the user speaks "copy" when instructing the activation of the audio assistant program), the sequence proceeds as indicated in FIG. 24.

When the user speaks the phrase of "copy," the phrase spoken by the user is acquired as audio data by the smart speaker 50 (acquisition unit 211) (step S1-1).

Then, the smart speaker 50 (communication control unit 212) transmits the audio data of "copy" to the cloud 100 (step S2-1). At this time, the smart speaker 50 (communication control unit 212) transmits the device ID identifying the smart speaker 50 to the cloud 100.

In the cloud 100, the operation audio conversion unit 310 (acquisition unit 311) acquires the audio data, and then the operation audio conversion unit 310 performs the processing of text data interpretation in steps S3-1, S4-1 and S5-1 in the same manner as in step S3a to S5a in FIG. 23, and the then operation audio conversion unit 310 transfers the interpretation result to the management unit 330 (step S6-1). In this example case, the action of "Copy_Execute" corresponding to "copy" is transferred to as the interpretation result.

Then, the management unit 330 (execution determination unit 335) determines whether the required parameter is insufficient (step S75-1). In this example case, since the user speaks "copy" alone, the setting value, such as the number of copies (required parameter) is not specified.

Therefore, the cloud 100 inquiries the insufficient parameter to the smart speaker 50. Specifically, at this stage, since the setting value is insufficient, the management unit 330 (notification unit 336) generates response information including "if copying is performed using previous setting, speak "use previous setting"" and transmits the audio data of "if copying is performed using previous setting, speak "use previous setting"" to the smart speaker 50 via the operation audio conversion unit 310 (output unit 314) (steps S75-1, S76-1, S77-1).

Then, the smart speaker 50 (feedback unit 213) outputs an audio of "if copying is performed using previous setting, speak "use previous setting"" (step S78-1). In this case, in addition to the audio output, a text of "if copying is performed using previous setting, speak "use previous setting"" can be displayed on the touch panel 27. The feedback text is not limited thereto. For example, a feedback text of "input setting value" can be used.

Then, in response to receiving the "input insufficient feedback," the user speaks, for example, "use previous setting." The audio spoken by the user is acquired as audio data by the smart speaker 50 (acquisition unit 211) (step S1-2).

Then, the smart speaker 50 (communication control unit 212) transmits the audio data of "use previous setting" to the cloud 100 (step S2-2). In step S2-2, the smart speaker 50 (communication control unit 212) transmits the device ID identifying the smart speaker 50 to the cloud 100.

In the cloud 100, the operation audio conversion unit 310 (acquisition unit 311) acquires the audio data, and then the operation audio conversion unit 310 performs the processing of text data interpretation in steps S3-2, S4-2 and S5-2 in the same manner as in step S3a to S5a in FIG. 23, and then the operation audio conversion unit 310 transfers the interpretation result to the management unit 330 (step S6-2).

Then, the operation audio conversion unit 310 (interpretation unit 313) generates the parameter such as "Parameter: previous setting" as the interpretation result and transfers the interpretation result to the management unit 330. The operation audio conversion unit 310 can set the parameter such as "Parameter: color = monochrome, printing face = both faces, number of copies = two" based on the history information, and transfers the interpretation result to the management unit 330.

Specifically, the management unit 330 (DB management unit 337) integrates the interpretation result of the previously spoken phrase and the interpretation result of the currently spoken phrase to set a complete set of the action and parameter. In this example case, the management unit 330 prepares a complete set of the action of "Copy_Execute" and the parameter of "Parameter: previous setting" as an integrated interpretation result. Then, the management unit 330 (execution determination unit 335) determines again whether the required parameter is insufficient based on the integrated interpretation result. In this example case, when the user speaks "use previous setting," the insufficient state of the required parameter for the copy job is solved. In this example case, the management unit 330 can set the parameter such as "Parameter: color = monochrome, printing face = both faces, number of copies = two" based on the history information.

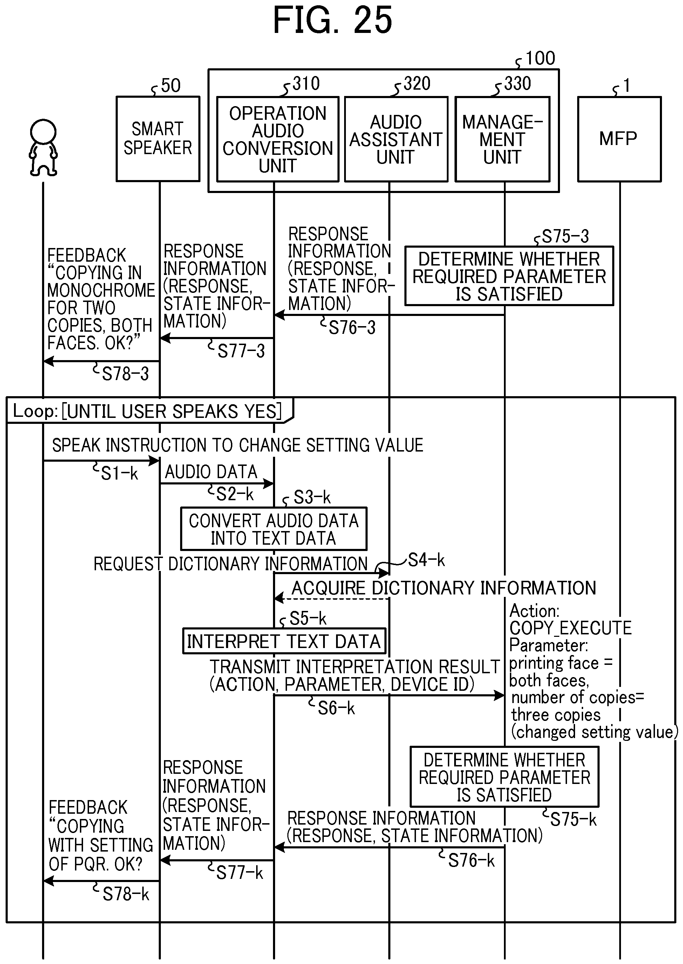

In this example case, the input confirmation feedback is further performed as indicated in FIG. 25.

The management unit 330 (notification unit 336) generates response information, such as "Copying in monochrome for two copies, both faces. OK?" to perform the input confirmation feedback, and then transmits audio of "Copying in monochrome for two copies, both faces. OK?" to the smart speaker 50" via the operation audio conversion unit 310 (output unit 314) (steps S75-3, S76-3, S77-3).

Then, the smart speaker 50 (feedback unit 213) outputs an audio of "Copying in monochrome for two copies, both faces. OK?" (step S78-3). In this case, in addition to the audio output, a text of "Copying in monochrome for two copies, both faces. OK?" can be displayed on the touch panel 27. Further, in place of outputting the text data and audio data included in the response information, the output information can be generated by combining the text data stored in the storage unit of the smart speaker 50 based on the information included in the response information.

Thereafter, in response to receiving the input confirmation feedback, the user speaks a change of setting value or the start of copying to the terminal, such as the smart speaker 50.

If the user speaks the content of changing the setting value (step S1-k), audio data of the spoken content of the changed setting value is transmitted from the smart speaker 50 to the cloud 100 (step S2-k), the setting value is changed in the cloud 100, and then the audio feedback of "setting value is changed" is performed by using the smart speaker 50 (steps S3-k, S4-k,S5-k,S6-k, S75-k, S76-k, S77-k, S78-K). The audio feedback is performed, for example, by outputting "copying with setting of PQR. OK?" to check whether the copying can be started with the changed setting value, such as PQR.

Thereafter, if the user speaks the content of changing the setting value again, this procedure is repeated. Therefore, after outputting the audio output of ""Copying in monochrome for two copies, both faces. OK?," the procedure is repeated for the number of times (k-times) that the user speaks the content of changing the setting value.

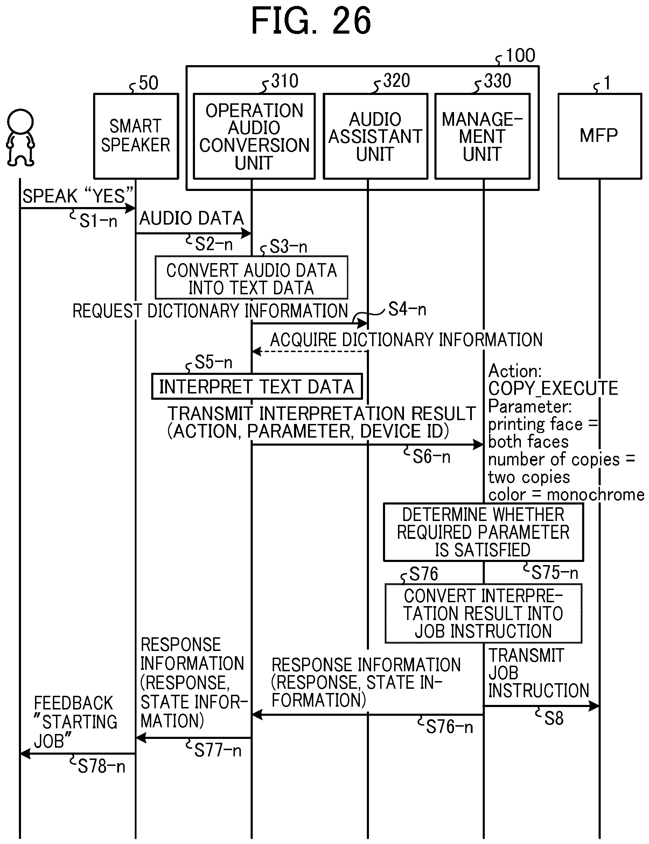

Further, if the user instructs a start of copying by speaking "Yes," steps indicated in FIG. 26 are performed. That is, the audio spoken by the user is acquired as audio data by the smart speaker 50 (acquisition unit 211) (step S1-n).

Then, the smart speaker 50 (communication control unit 212) transmits the audio data of "Yes" to the cloud 100 (step S2-n). In step S2-n, the smart speaker 50 (communication control unit 212) transmits the device ID identifying the smart speaker 50 to the cloud 100.

In the cloud 100, the operation audio conversion unit 310 (acquisition unit 311) acquires the audio data (step S2-n), and then the operation audio conversion unit 310 performs the processing of text data interpretation in steps S3-n, S4-n, and S5-n in the same manner as in step S3a to S5a in FIG. 23, and then the operation audio conversion unit 310 transfers the interpretation result to the management unit 330 (step S6-n).

When the operation audio conversion unit 310 (interpretation unit 313) recognizes the copy start instruction, the operation audio conversion unit 310 transfers the interpretation result to the management unit 330, and then the management unit 330 (execution determination unit 335) determines that the final confirmation is OK (step S75-n).

Then, the management unit 330 (interpretation result conversion unit 332) converts the interpretation result to the job instruction of the MFP 1 (step S76).

Then, the management unit 330 (execution instruction unit 333) transmits the execution instruction information, which is converted from the interpretation result, to the MFP 1 (step S8). Thus, the MFP 1 can be controlled for executing the copying using the above described audio input operation.

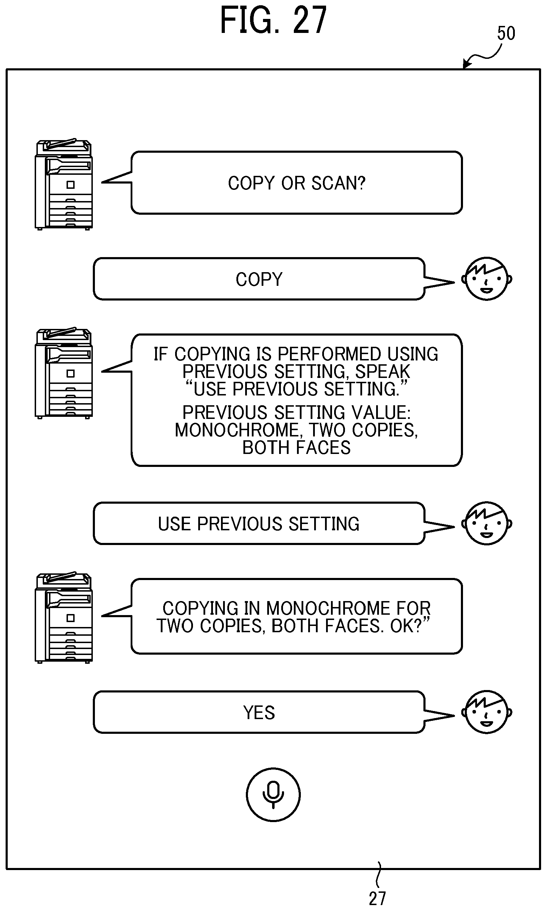

FIG. 27 is an example of a screen displayed on a display of the smart speaker 50. As indicated in FIG. 27, the screen displayed on the display of the smart speaker 50 is the same as the screen displayed on the mobile terminal 2 indicated in FIG. 13.

The phrase spoken to the smart speaker 50 and the processing of feedback are the same as those indicated in FIG. 13 of the first embodiment. Specifically, the smart speaker 50 outputs the content spoken by the user and the response information received from the cloud service apparatus 60 (operation audio conversion program) as indicated in steps S76-n, S77-n and S78-n in FIG. 26. The response information includes at least one of text data, audio data, and image data.

In FIG. 27, the comment displayed from the right side of the touch panel 27 of the smart speaker 50 indicates a comment indicating the content spoken by the user to the smart speaker 50. In FIG. 27, the comment displayed from the left side of the touch panel 27 of the smart speaker 50 is a comment indicating the content fed back from the cloud service apparatus 60 in response to the user-spoken phrase. That is, when the smart speaker 50 receives the feedback information from the cloud service apparatus 60, the smart speaker 50 feeds back to the user using the audio output and also using the screen display, in which the feedback of the audio output can be omitted.

Referring to FIGs. 23 to 26, the comment of "copy or scan?" is displayed on the screen of the touch panel 27 of the smart speaker 50 with the audio feedback in step S78.

The operation audio processing program of the smart speaker 50 may generate to-be-displayed text based on the response information received from the cloud service apparatus 60, or may display text data stored in advance in the ROM 23 of the smart speaker 50. Further, the text data and the audio data included in the response information may be displayed as they are.

The operation audio processing program of the smart speaker 50 can receive a comment of "copy," converted from the audio data into the text data by the cloud service apparatus 60 (operation audio conversion program) as the response information, and displays the comment of "copy" on the screen of the touch panel 27 of the smart speaker 50.

Further, the cloud service apparatus 60 (operation audio conversion program) can transmit the response information at any timing. For example, the cloud service apparatus 60 (operation audio conversion program) can generate the response information of "copy" at the timing when the cloud service apparatus 60 converts the audio data into the text data, and then transmits the response information of "copy" to the smart speaker 50, in which only "copy" may be displayed.

Further, the cloud service apparatus 60 (management program) can generate the response information of "copy" at the timing when the cloud service apparatus 60 generate the response information of "if copying is performed using previous setting, speak "use previous setting"," and then transmits the response information to the smart speaker 50, in which text of "copy" and text of "if copying is performed using previous setting, speak "use previous setting"" can be displayed on the touch panel 27 of the smart speaker 50 almost simultaneously.

Further, the operation audio conversion program can transmit information necessary for generating the response information of "copy" when transmitting the interpretation result setting the intent (action) of "Copy_Execute" to the management program.

Further, if the response information is generated by the operation audio conversion program, and then the management program transmits the response information of "if copying is performed using previous setting, speak "use previous setting"" to the smart speaker 50 via the operation audio conversion program, the response information of "copy" can be transmitted to the smart speaker 50 with the response information of "if copying is performed using previous setting, speak "use previous setting.""

The operation audio processing program of the smart speaker 50 displays the comment of "if copying is performed using previous setting, speak "use previous setting"" on the screen of the touch panel 27 of the smart speaker 50 with the audio feedback in step S78-1 in FIG. 24. That is, the smart speaker 50 displays the comment based on the response information received from the cloud service apparatus 60 (management program).

The operation audio processing program of the smart speaker 50 can display the comment of "use previous setting" by receiving the text data converted from the audio data by the cloud service apparatus 60 (operation audio conversion program). The display method is the same as the method described in the description of "copy."

The operation audio processing program of the smart speaker 50 displays the comment of "Copying in monochrome for two copies, both faces. OK?" on the screen of the touch panel 27 of the smart speaker 50 with the audio feedback in step S27 in FIG. 14. That is, the smart speaker 50 displays the comment based on the response information received from the cloud service apparatus 60 (management program).

As above described, the smart speaker 50 displays the comment on the screen of the touch panel 27 of the smart speaker 50 based on the text data stored in the smart speaker 50 in advance, or the text data or the response information received from the cloud service apparatus 60.

Hereinafter, a description is given of an example case applying the first embodiment to the second embodiment.

When the user speaks "use previous setting" to the smart speaker 50, the cloud service apparatus 60 reflects the job setting performed in the past or previously. At this time, the cloud service apparatus 60 can set or reflect a job condition of job that was executed most recently by referring to the history information. Further, if two or more jobs were executed within a pre-set period of time, the cloud service apparatus 60 can demand or prompt the user which job condition is to be set or reflected.

If the history information is stored in the cloud service apparatus 60 and the user speaks "use previous setting for copying" to the smart speaker 50, the operation audio conversion program interprets the text data of "use previous setting for copying," and determines the job type is copy from the text of "copy," and sets the job condition by interpreting the text of "previous setting" based on the history information. In this configuration, the cloud service apparatus 60 acquires the history information from the storage unit, such as the HDD 34 in the cloud service apparatus 60 or from a storage of an accessible external server.

The history information may be stored for each device ID of each of the smart speakers 50. In this case, for example, the smart speaker 50 transmits, to the cloud service apparatus 60, the device ID identifying the smart speaker 50 with the audio data. With this configuration, the operation audio conversion program can identify the smart speaker 50 and read out the history information associated with the smart speaker 50.

The operation audio conversion program may read out the most-recent history information or a plurality of history information executed within a pre-set period of time from the history information.

If the most-recent history information is read out, the operation audio conversion program transmits the "Action: Copy_Execute" and the "Parameter: read-out job condition" to the management program as the interpretation result.

Further, if the plurality of history information is read out, the operation audio conversion program inquires the smart speaker 50 which history is to be reflected as the job execution condition. For example, the operation audio conversion program transmits the response information including information of "history 1" and "history 2" to the smart speaker 50. The "history 1" and "history 2" indicate the history of jobs that were executed separately. The information of "history 1" and "history 2" includes various information, such as date and time and the job condition when each history operation was executed. Further, two or more histories can be transmitted to the smart speaker 50.

The smart speaker 50 can display the history information as the comment on the screen of the touch panel 27 of the smart speaker 50, and demands or prompts the user to choose which job condition is to be used for executing the job. The user can select the job condition by touching a comment displayed as selectable option on the screen of the touch panel 27 or by speaking a phrase specifying the job condition. Then, the smart speaker 50 transmits information indicating which history is selected to the operation audio conversion program.

Further, the smart speaker 50 can output the audio feedback, and receive an instruction from the user by audio (e.g., voice). In this case, the operation audio conversion program determines which history is selected by interpreting the audio data.

In the above described example case, the user speaks "use previous setting," but the user can designate date and time, such as "use setting one hour ago" or "use setting of yesterday." In this case, the operation audio conversion program interprets the designated date and time from the text specifying the date and time, such as "one hour ago" and "yesterday" included in the text data. Then, the cloud service apparatus 60 searches the history information using the designated date and time as a keyword and extracts the history information having the date and time that matches the designated date and time.

If the plurality of history information is read out as above described, by transmitting the interpretation result to the smart speaker 50 as described above, the smart speaker 50 displays the history as the comment on the screen of the smart speaker 50, and demands or prompts the user to choose which job condition is to be executed.

As to the second embodiment, when the user uses the smart speaker 50, the settings can be displayed on the screen of the touch panel 27 of the smart speaker 50 if the setting previously used for printing exists. Then, if the user speaks "use previous setting" by seeing the settings displayed on the touch panel 27, the printing using the previous setting can be performed by speaking a single phrase such as "use previous setting," with which the job can be instructed with a smaller number of dialogues and intuitive manner when instructing the specific operation.

As to the second embodiment, when a specific keyword such as "use previous setting" is spoken when to perform the copying using the previous setting, the cloud service apparatus 60 reflects the most-recent job condition, but not limited thereto.

For example, when a specific keyword such as "normal setting" or "conference" is spoken to the smart speaker 50, the cloud service apparatus 60 can reflect the job condition registered in advance (hereinafter, registration condition).

If the registration condition is stored in the cloud service apparatus 60 and the user speaks "use normal setting for copying," the operation audio conversion program interprets the text data of "use normal setting for copying," and determines the job type is copy from the text of "copy," and sets the job condition by interpreting the text of "normal setting" by referring to the registration condition. In this configuration, the cloud service apparatus 60 acquires the registration condition from the storage unit, such as the HDD 34 in the cloud service apparatus 60 or from a storage of an accessible external server.

The registration condition may be stored for each device ID of each of the smart speakers 50. With this configuration, the operation audio conversion program can read out the registration condition associated with the device ID (if a specific keyword, such as "conference," is designated, the registration condition corresponding to the specific keyword is searched.).

If the registration condition is read out, the operation audio conversion program transmits "Action: Copy_Execute" and "Parameter: read-out job condition" as the interpretation result.

The registration condition can be stored in the storage unit of the cloud service apparatus 60 in advance. Further, the registration condition can be registered by associating with the specific keyword, such as "conference" in accordance with the registration condition. For example, the client computer can access the cloud service apparatus 60 to set the registration condition.

Further, job conditions of the jobs executed in the past or the jobs executed currently can be registered as the registration condition. In this case, by touching the comment displayed on the screen of the touch panel 27 of the smart speaker 50, a screen indicating whether or not the comment is to be stored as the registration condition is displayed, and by operating the screen, the job condition (i.e., action and parameter) corresponding to the comment can be stored in the cloud service apparatus 60 based on the instruction from the smart speaker 50. That is, the smart speaker 50 transmits an instruction to register the currently-set job condition or the most-recent job condition to the operation audio conversion program. At this time, a specific keyword, such as "conference," may be also transmitted as audio data or text data. If the operation audio conversion program receives the specific keyword from the smart speaker 50, the operation audio conversion program registers the job condition in association with the specific keyword. Further, the job condition to be registered can be transmitted from the smart speaker 50.

Further, the user can speak "register setting value" for performing the registration. In this case, the operation audio conversion program interprets the text data, and determines to execute the process of registering the currently-set job condition or the most-recent job condition.

If the user speaks "register setting value for conference," that is, when a specific keyword is included in the spoken phrase, the job condition is registered in association with the specific keyword.

Conventionally, when an interactive operation procedure is used for operating target apparatuses (e.g., image forming apparatuses) using voice sound as instructions to the target apparatuses, users not familiar with voice-based operations may instruct a job to the target apparatuses by answering every one of the setting conditions inquired from the target apparatuses one by one, causing a longer time to execute the job using the target apparatuses.

As to the above described embodiments of information processing system, method of processing information, and non-transitory computer readable storage medium, a given operation can be performed with a smaller number of dialogues and intuitive manner. Specifically, if a specific keyword is included in a user spoken instruction, pre-defined specific operation information can be displayed on a screen of the information processing apparatus, with which a specific operation can be performed with a smaller number of dialogues and intuitive manner when instructing the specific operation.

Each of the embodiments described above is presented as an example, and it is not intended to limit the scope of the present disclosure. Numerous additional modifications and variations are possible in light of the above teachings. It is therefore to be understood that, within the scope of the appended claims, the disclosure of this specification can be practiced otherwise than as specifically described herein. Any one of the above-described operations may be performed in various other ways, for example, in an order different from the one described above.

In the above described one or more embodiments, the image forming apparatus is described as a multifunctional apparatus having at least two functions, selectable from copying function, printer function, scanner function and facsimile function, but the above described embodiments can be applied to any image forming apparatus such as copier, printer, scanner, facsimile machine.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside the apparatus as long as the HDD is accessible. In this example, the CPU, such as a cashe memory of the CPU, and the RAM may function as a physical memory or a primary memory of the apparatus, while the HDD may function as a secondary memory of the apparatus.

## Claims

1. An information processing system, comprising:
an acquisition unit (51) configured to acquire audio information used for operating a target apparatus (1);
an audio recognition unit (62) configured to recognize content of the acquired audio information as a recognition result to determine whether the recognition result includes a specific keyword;
a notification unit (55) configured to notify, using a display, pre-defined specific operation information when the recognition result includes the specific keyword; and
an output unit (52) configured to output the pre-defined specific operation information to the target apparatus (1).

2. The information processing system according to claim 1,
wherein the notified pre-defined specific operation information was output to the target apparatus (1) in the past.

3. The information processing system according to claim 1,
wherein the notified pre-defined specific operation information was registered in the past.

4. A method of processing information, the method comprising:
acquiring audio information used for operating a target apparatus (1);
recognizing content of the acquired audio information as a recognition result;
determining whether the recognition result includes a specific keyword;
notifying, using a display, pre-defined specific operation information when the recognition result includes the specific keyword; and
outputting the pre-defined specific operation information to the target apparatus (1).

5. The method according to claim 4,
wherein the notified pre-defined specific operation information was output to the target apparatus (1) in the past.

6. The method according to claim 4,
wherein the notified pre-defined specific operation information was registered in the past.

7. A carrier means storing one or more instructions that, when performed by one or more processors, cause the one or more processors to execute a method of processing information, the method comprising:
acquiring audio information used for operating a target apparatus (1);
recognizing content of the acquired audio information as a recognition result;
determining whether the recognition result includes a specific keyword;
notifying, using a display, pre-defined specific operation information when the recognition result includes the specific keyword; and
outputting the pre-defined specific operation information to the target apparatus (1).

8. The carrier means according to claim 7,
wherein the notified pre-defined specific operation information was output to the target apparatus (1) in the past.

9. The carrier means according to claim 7,
wherein the notified pre-defined specific operation information was registered in the past.
